# EUROPEAN PATENT APPLICATION

(11) **EP 3 705 587 A1**
(43) Date of publication of application: **09.09.2020**
(21) Application number: 18871892.8
(22) Date of filing: 18.10.2018
(51) Int. Cl.: C21D 1/00, C21D 1/18, C21D 1/667

(54) **FACILITY AND METHOD FOR PRODUCING THICK STEEL SHEET**

(30) Priority: 31.10.2017 JP 2017210574; 31.01.2018 JP 2018015945
(71) Applicant: JFE Steel Corporation, Tokyo 100-0011 (JP)
(72) Inventor: UEOKA Satoshi, Tokyo 100-0011 (JP); NOJIMA Yusuke, Tokyo 100-0011 (JP); MIYANO Taiki, Tokyo 100-0011 (JP); MIURA Ken, Tokyo 100-0011 (JP); KUMANO Ori, Tokyo 100-0011 (JP); TAMURA Yuta, Tokyo 100-0011 (JP)
(74) Representative: Hoffmann Eitle
(86) International application number: PCT/JP2018/038881
(87) International publication number: WO 2019/087805

(57) **Abstract**

There is provided a facility and a method for producing a steel plate capable of producing a steel plate which has high strength and a low yield ratio and in which a variation in the yield ratio is less in the same steel plate. A facility (1) for producing a steel plate (S) is provided with a heating furnace (2) heating a steel plate (S) of 100°C or less to an austenite temperature range and a quenching device (3) quenching the steel plate (S) heated in the heating furnace (2). The quenching device (3) is provided with a slow cooling zone (4) slowly cooling the steel plate (S) extracted from the heating furnace (2) and a rapid cooling zone (5) rapidly cooling the steel plate (S) having passed through the slow cooling zone (4) . A draining device (9) is disposed between an upper slow cooling nozzle (6a) in the slow cooling zone (4) and an upper rapid cooling nozzle (7a) in the rapid cooling zone (5). The distance from the heating furnace (2) to the slow cooling zone (4) is within 4 m.

## Description

### Technical Field

The present invention relates to a facility and a method for producing a steel plate including reheating and quenching a steel plate of 100°C or less with an offline heat treatment facility.

### Background Art

In recent years, a large earthquake has occurred in Japan, and thus, from the viewpoint of safety focusing on high-rise buildings, a need for low yield ratio steel having a yield ratio, which is a ratio of the yield strength to the tensile strength, of 80% or less in addition to an increase in the strength of a steel plate (tensile strength of 490 MPa or more) in order not to cause the collapse of the buildings has been growing. Conventionally, as a method for producing the steel plate having such high strength and a low yield ratio, one described in PTL 1 is known, for example. In order to achieve a low yield ratio while maintaining high strength, a method has been widely utilized which disperses a soft ferrite phase (α) and hard bainite (β) or martensite (M), for example, as the structures of the steel plate at an appropriate ratio according to strength.

Herein, according to a method for producing low yield ratio, low carbon, low alloy, and high tensile strength steel illustrated in PTL 1, rolling at a cumulative draft at 950°C or less of 25% or more is performed when hot-rolling a steel slab having a predetermined component, and then so-called offline heat treatment using a heating furnace and a cooling device present in a place different from the place of a hot-rolling line is performed. In the offline heat treatment, the steel slab is heated to an appropriate intermediate temperature between the Ac1 transformation point and the Ac3 transformation point, cooled at a cooling rate equal to or more than air cooling sufficient for a transformation austenite phase to obtain martensite or a low-temperature transformation product or a mixed structure of both of them, and then tempered at the Ac1 transformation point temperature or less. The offline heat-treated steel plate is generally referred to as heat-treated steel.

On the other hand, one for obtaining a steel plate having a low yield ratio not involving the offline heat treatment, those illustrated in PTLs 2 and 3 are known, for example. Methods illustrated in PTLs 2 and 3 have a process of directly cooling a hot steel plate immediately after hot-rolling, which is referred to as online heat treatment.

A method for producing high toughness high tensile strength steel illustrated in PTL 2 includes heating steel of a predetermined component to 1000°C to 1300°C, and then hot-rolling the steel to have a section rate of 80% or more at least in a temperature range of 980°C or less to the Ar3. Then, immediately thereafter, a steel plate is subjected to air cooling to the Ar3 transformation temperature or less at which ferrite is generated or cooling equivalent thereto, whereby ferrite is first generated, and then the steel plate is rapidly cooled, so that a two-phase lamellar structure of ferrite/martensite is formed.

A method for producing low yield ratio high tensile strength steel illustrated in PTL 3 includes hot-rolling steel in a predetermined component range, cooling the steel at a cooling rate of 5°C/s or more until an austenite fraction in a central portion in the plate thickness is 90% or less, increasing the temperature to Ac1 transformation point + 20°C to Ac3 transformation point - 20°C, holding the heating, forcibly cooling the steel at a cooling rate of 5 to 30°C/s, and then stopping the forced cooling at 600 to 400°C.

The steel plates produced without an offline heat treatment process as with the methods illustrated in PTLs 2 and 3 are generally referred to as non-heat treated steel.

### Citation List

### Patent Literatures

PTL 1: JP 55-97425 A
PTL 2: JP 55-41927 A
PTL 3: JP 6-271934 A
PTL 4: JP 5217509
PTL 5: JP 2015-174134 A

### Summary of Invention

### Technical Problem

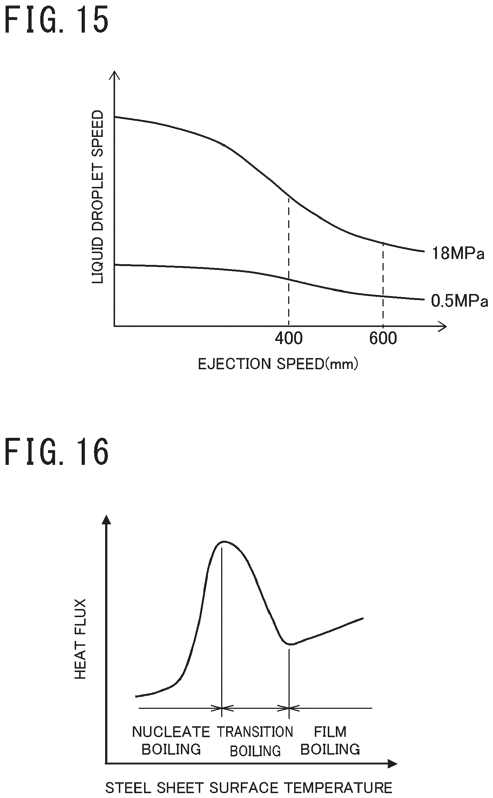

In general, when a hot steel plate is water-cooled, film boiling having a low heat flux occurs in a high temperature region and, as the surface temperature of the steel plate decreases, a nucleate boiling state is set through a transition boiling state in which cooling is unstable as illustrated in FIG. 16.

Herein, in the transition boiling region, the heat flux increases as the surface temperature of the steel plate is a lower temperature. Therefore, when there is a temperature deviation in the steel plate in the start of the cooling, the temperature deviation expands as the cooling proceeds. Insofar as the cooling is performed in the transition boiling region, local temperature unevenness is integrated and expanded, so that the quality of the steel plate after the cooling varies.

On the other hand, in the film boiling region or the nucleate boiling region, while the cooling is promoted because the heat flux is high in a high temperature portion, the cooling is delayed because the heat flux is low in a low temperature portion. As a result, a temperature difference therebetween decreases and the temperature unevenness decreases. However, the cooling by the nucleate boiling has high cooling capacity, and therefore is not suitable for a case of performing cooling at a low cooling rate (For example, the average cooling rate of the plate thickness cross section when the plate thickness is 20 mm is 5°C/s.).

Therefore, when water-cooling a hot steel plate at a low cooling rate, the cooling is performed in the film boiling region while avoiding the transition boiling region, whereby uniform cooling can be achieved. In general, when the water amount density of cooling water ejected to the steel plate is low, the film boiling is likely to occur. Therefore, in order to realize the uniform cooling, it is necessary to avoid the transition boiling region by performing the cooling with a low water amount density.

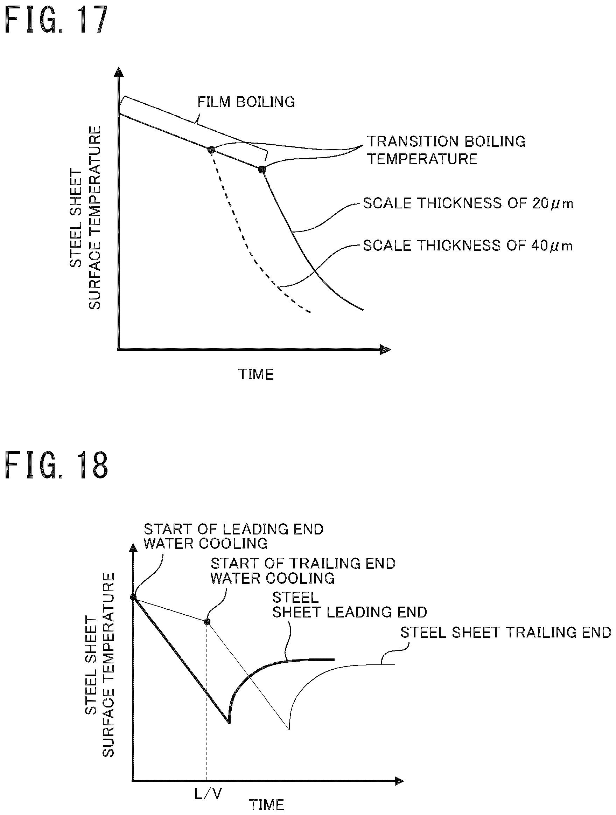

Furthermore, the temperature at which the film boiling shifts to the transition boiling (hereinafter referred to as a transition boiling temperature) is affected by scale generated on the surface of a steel plate. When the present inventors have conducted an examination, the relationship between the scale thickness and the temperature history of the steel plate in cooling is as illustrated in FIG. 17. As the scale thickness is larger, the transition boiling temperature increases and the transition boiling is likely to occur.

Herein, as a method for removing the scale before the cooling and realizing the uniform cooling, a method for producing a steel plate illustrated in PTL 5 is known, for example. The method for producing a steel plate illustrated in PTL 5 includes completing a final rolling pass, ejecting high-pressure water having an energy density of 0.10 J/mm² or more to the front and rear surfaces of the entire length of a steel plate with a descaling device while conveying the steel plate, and then performing accelerated cooling of the steel plate. The ejection pressure of the high-pressure water with the descaling device is set to 10 MPa or more.

However, in the case of the method for producing a steel plate illustrated in PTL 5, the high-pressure water having an energy density of 0.10 J/mm² or more and also an ejection pressure of 10 MPa or more needs to be ejected with the descaling device. Therefore, a large quantity of energy is required for the scale removal and a high-pressure descaling pump, piping, and the like are required.

Moreover, when a passing type cooling device which has been widely used in recent years is used in carrying out the cooling in the online heat treatment, the timing of entering the cooling device deviates between the leading end and the trailing end of the steel plate. More specifically, when the conveying speed of the steel plate is set as V (m/s) and the length of the steel plate is set as L (m), the trailing end of the steel plat is allowed to cool for a long period of time by L/V (s) as compared with the leading end, and therefore the cooling start temperature is different between the leading end and the trailing end of the steel plate. FIG. 18 illustrates the temperature histories of the leading end and the trailing end of the steel plate in the cooling. Due to the difference in the cooling start temperature between the leading end and the trailing end of the steel plate, there is a problem that the ferrite fraction changes within the plate and the yield ratio varies in the same steel plate.

Herein, according to the method for producing the low yield ratio, low carbon, low alloy, and high tensile strength steel illustrated in PTL 1, while a steel plate having a low yield ratio is obtained with sufficient reproducibility by appropriately selecting the intermediate heat treatment temperature (Intermediate temperature between the Ac1 transformation point and the Ac3 transformation point) in the offline heat treatment, a plurality of times of heat treatment processes including heating and cooling is required after hot-rolling, so that the energy cost increases and a reduction in productivity of the steel plate cannot be avoided.

Moreover, according to the method for producing the high toughness high tensile strength steel illustrated in PTL 2, the online heat treatment is performed and reheating is not performed after hot-rolling, and therefore the method is very advantageous from the viewpoint of energy cost. However, in the method illustrated in PTL 2, immediately after hot-rolling, the steel plate is subjected to the air cooling to the Ar3 transformation temperature at which ferrite is generated or the cooling equivalent thereto. During this waiting period, the other raw materials cannot be rolled, which serves as an impeding factor of the productivity of the hot-rolling line.

Moreover, according to the method for producing the low yield ratio high tensile strength steel illustrated in PTL 3, although the online heat treatment is performed, a temperature increase process is required after the cooling is performed at a cooling rate of 5°C/s or more until the austenite fraction of the central portion in the plate thickness is 90% or less, and therefore it is necessary to install a heating device in the hot-rolling line. In PTL 3, this heating device is not described and the installing of such a heating device in the hot-rolling line itself has high technical difficulty.

Moreover, as a problem of the online heat treatment in the methods as illustrated in PTLs 2 and 3, there is the problem that, due to the difference in the cooling start temperature between the leading end and the trailing end of the steel plate, the ferrite fraction changes within the plate and the yield ratio varies within the same steel plate as described above.

As a method for keeping the quenching start temperature of a steel plate at the leading end and the trailing end of the steel plate constant, a method and a facility for producing a steel plate illustrated PTL 4 is conventionally known, for example.

In the method and the facility for producing a steel plate illustrated PTL 4, two cooling devices are prepared and a temperature difference is given to the leading end and the trailing end of the steel plate beforehand with a first cooling device, so that the temperature difference between the temperature of the leading end of the steel plate and the temperature of the trailing end of the steel plate when entering a second cooling device is within 50°C.

However, in the method and the facility for producing a steel plate illustrated in PTL 4, when the plate thickness is small, the cooling rate is high even in air cooling, and therefore the quenching temperature (temperature of the steel plate when entering the first cooling device and the second cooling device) becomes lower than a predetermined temperature. Thus, in an actual operation, it has been difficult to set the temperature difference between the temperature of the leading end of the steel plate and the temperature of the trailing end of the steel plate when entering the second cooling device to be within 50°C.

Therefore, the present invention has been made in order to solve the conventional problems. It is an object of the present invention to provide a facility and a method for producing a steel plate capable of producing a steel plate which has high strength and a low yield ratio and in which a variation in the yield ratio is less in the same steel plate while making energy cost inexpensive and not causing a reduction in productivity of a steel plate.

### Solution to Problem

In order to achieve the above-described object, a facility for producing a steel plate according to one aspect of the present invention is a facility for producing a steel plate provided with a heating furnace heating a steel plate of 100°C or less to an austenite temperature range and a quenching device quenching the steel plate heated in the heating furnace, in which the quenching device is provided with a slow cooling zone slowly cooling the steel plate extracted from the heating furnace and a rapid cooling zone rapidly cooling the steel plate having passed through the slow cooling zone, at least a pair of upper and lower slow cooling nozzles is disposed along the conveying direction of the steel plate in the slow cooling zone, at least a pair of upper and lower rapid cooling nozzles is disposed along the conveying direction of the steel plate in the rapid cooling zone, a draining device is disposed between the upper slow cooling nozzle in the slow cooling zone and the upper rapid cooling nozzle in the rapid cooling zone, and the distance from the heating furnace to the slow cooling zone is set to be within 4 m.

A method for producing a steel plate according to another aspect of the present invention is a method for producing a steel plate including a heating process of heating a steel plate of 100°C or less to an austenite temperature range in a heating furnace and a quenching process quenching the steel plate heated in the heating process with a quenching device, in which the quenching process includes a slow cooling process of slowly cooling the steel plate extracted from the heating furnace by a slow cooling zone of the quenching device disposed within 4 m from the heating furnace and a rapid cooling process of rapidly cooling the steel plate having passed through the slow cooling zone by a rapid cooling zone of the quenching device, in the slow cooling process, the slow cooling is performed by ejecting cooling water to the steel plate from at least a pair of upper and lower slow cooling nozzles in the slow cooling zone in which the slow cooling nozzles are disposed along the conveying direction of the steel plate and, in the rapid cooling process, the rapid cooling is performed by ejecting cooling water to the steel plate from at least a pair of the upper and lower rapid cooling nozzles in the rapid cooling zone in which the rapid cooling nozzles are disposed along the conveying direction of the steel plate, a draining device is disposed between the upper slow cooling nozzle in the slow cooling zone and the upper rapid cooling nozzle in the rapid cooling zone, and the draining device restrains the cooling water from the upper slow cooling nozzle and the cooling water from the upper rapid cooling nozzle to avoid mixture of the cooling water from the upper slow cooling nozzle and the cooling water from the upper rapid cooling nozzle.

### Advantageous Effects of Invention

The facility and the method for producing a steel plate according to the present invention can provide a facility and a method for producing a steel plate capable of producing a steel plate which has high strength and a low yield ratio and in which a variation in the yield ratio is less in the same steel plate.

### Brief Description of Drawings

FIG. 1 is a schematic block diagram of an offline heat treatment facility indicating a facility for producing a steel plate according to a first embodiment of the present invention;
FIG. 2 is a figure for explaining a temperature drop until the leading end and the trailing end of the steel plate enter a slow cooling zone of a quenching device after extracted from a heating furnace;

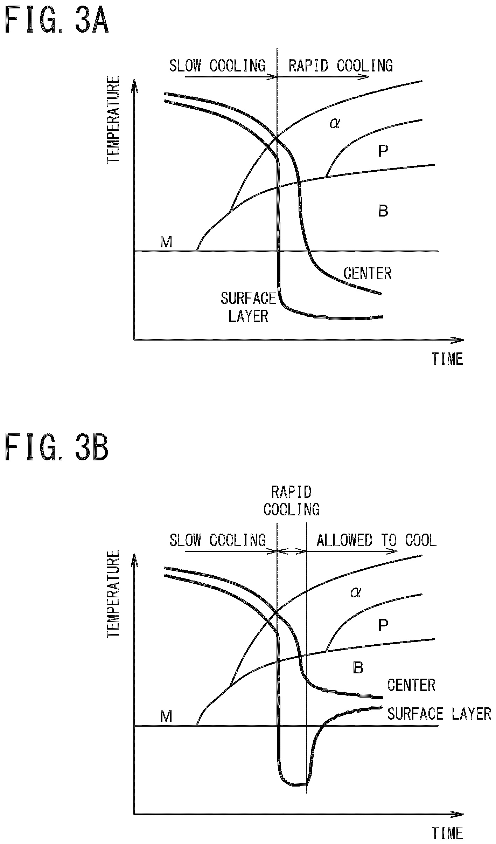

FIGS. 3 are figures explaining temperature histories and structure changes of the steel plate in the surface layer and the center in the plate thickness direction of the steel plate when cooled by applying the facility for producing a steel plate in the present invention using CCT diagrams, in which FIG. 3A is a figure explaining, using the CCT diagrams, the temperature histories and the structure changes of the steel plate in the surface layer and the center in the plate thickness direction of the steel plate when slow cooling is performed in the early stage of the cooling, and then rapid cooling is performed when the ferrite fractions in the surface layer and the center in the plate thickness direction of the steel plate reach a predetermined fraction to cool the steel plate to substantially room temperature to form a structure mainly containing martensite as a second phase and FIG. 3B is a figure explaining, using the CCT diagrams, the temperature histories and the structure changes of the steel plate in the surface layer and the center in the plate thickness direction of the steel plate when slow cooling is performed in the early stage of the cooling, rapid cooling is performed when the ferrite fractions in the surface layer and the center in the plate thickness direction of the steel plate reach a predetermined fraction, and then the rapid cooling is stopped when the average temperature in the plate thickness direction of the steel plate becomes a bainite generation temperature to form a structure mainly containing bainite as a second phase;
FIG. 4 is a figure explaining, using CCT diagrams, temperature histories and structure changes in the surface layer and the center in the plate thickness direction of the steel plate when cooled by applying a facility for producing a steel plate according to a reference example;
FIGS. 5 illustrate a case where a draining device is disposed between a slow cooling nozzle in a slow cooling zone and a rapid cooling nozzle in a rapid cooling zone and a case where the draining device is not disposed, in which FIG. 5A is a figure illustrating a case where the draining roll is not disposed and FIG. 5B is a figure illustrating a case where the draining roll is disposed;
FIG. 6 is a figure similar to FIG. 5B when the draining device is replaced by a modification;
FIGS. 7 illustrate examples of the slow cooling nozzles in the facility for producing a steel plate according to the first embodiment of the present invention, in which FIG. 7A is a schematic perspective view illustrating an example in which a spray shape is a full cone (collision shape: circular shape) and FIG. 7B is a schematic perspective view illustrating an example in which the spray shape is square spraying (collision shape: rectangular shape);
FIG. 8 is a figure illustrating an average temperature change in the plate thickness direction of the steel plate when cooling water is ejected from three pairs of upper and lower slow cooling nozzles from the head to the end in the slow cooling zone and cooling water is ejected from the two pairs of upper and lower rapid cooling nozzles from the head and cooling water is not ejected from the final one pair of upper and lower rapid cooling nozzles in the rapid cooling nozzle in the offline heat treatment facility illustrated in FIG. 1;

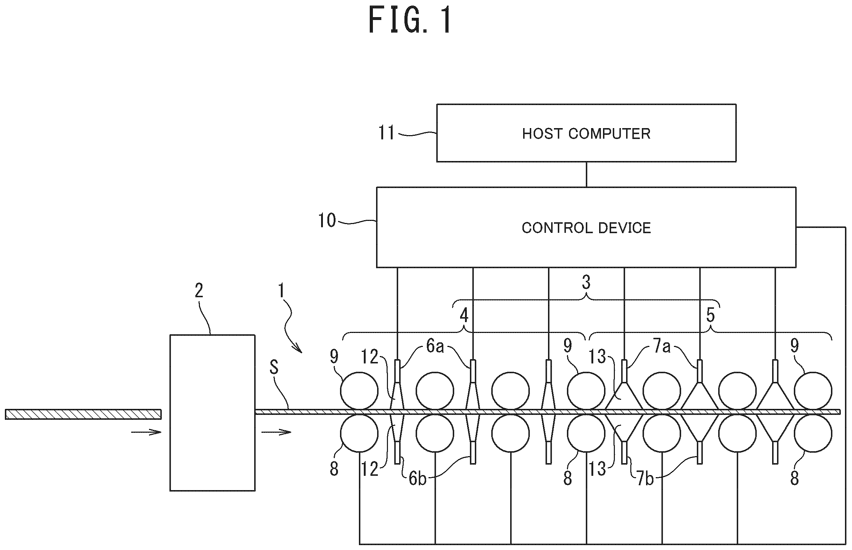

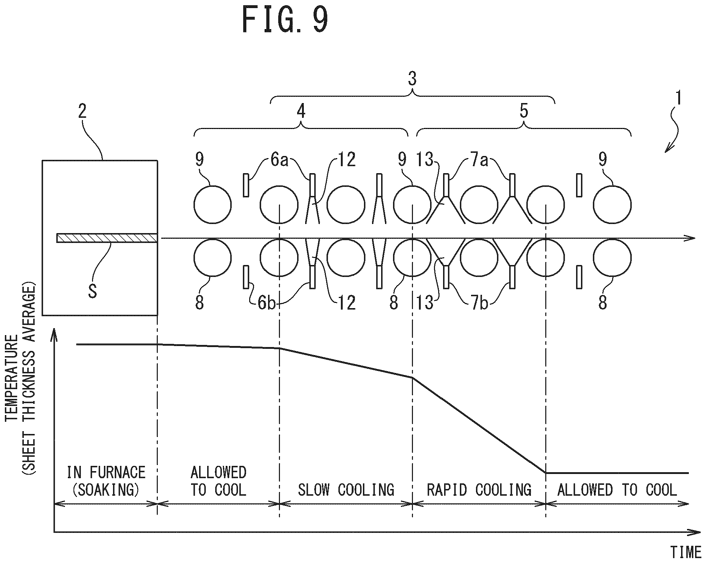

FIG. 9 is a figure illustrating an average temperature change in the plate thickness direction of the steel plate when cooling water is not ejected from one pair of upper and lower slow cooling nozzles at the head and cooling water is ejected from the remaining two pairs of upper and lower slow cooling nozzles in the slow cooling zone and cooling water is ejected from the two pairs of upper and lower rapid cooling nozzles and cooling water is not ejected from the final one pair of upper and lower rapid cooling nozzles in the rapid cooling zone in the offline heat treatment facility illustrated in FIG. 1;

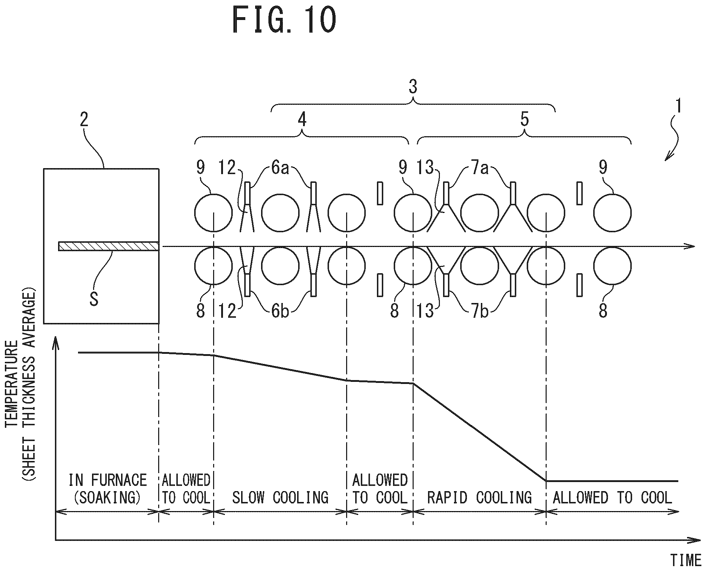

FIG. 10 is a figure illustrating an average temperature change in the plate thickness direction of the steel plate when cooling water is ejected from the two pairs of upper and lower slow cooling nozzles from the head and cooling water is not ejected from the final one pair of upper and lower slow cooling nozzles in the slow cooling zone and cooling water is ejected from the two pairs of upper and lower rapid cooling nozzles and cooling water is not ejected from the final one pair of upper and lower rapid cooling nozzles in the rapid cooling zone in the offline heat treatment facility illustrated in FIG. 1;
FIG. 11 is a schematic block diagram of a modification of an offline heat treatment facility to which a method and the facility for producing a steel plate according to the present invention are applied;
FIG. 12 is a schematic block diagram of an offline heat treatment facility indicating a facility for producing a steel plate according to a second embodiment of the present invention;
FIG. 13 is a graph illustrating a case where descaling is performed after offline reheating and a case where descaling is performed after online rolling by comparison about the relationship between a scale peeling rate and the energy density of ejection water;
FIGS. 14 illustrate descaling devices, in which FIG. 14A is a schematic block diagram of the descaling devices as viewed from the side surface side in the conveying direction of the steel plate, FIG. 14B is a schematic block diagram of the descaling devices as viewed from the front surface side in the width direction of the steel plate, and FIG. 14C is a figure illustrating a pattern of the ejection water as viewed from above of the steel plate and FIG. 14B does not illustrate the descaling device located on the lower side with respect to a conveying line;
FIG. 15 is a graph illustrating the relationship between the liquid droplet speed and the ejection distance to the ejection pressure of the ejection water from the descaling devices;
FIG. 16 is a graph for explaining film boiling, transition boiling, and nucleate boiling;
FIG. 17 is a graph illustrating the relationship between the scale thickness and a temperature history of the steel plate in cooling; and
FIG. 18 is a graph illustrating temperature histories of the leading end and the trailing end of the steel plate in cooling.

### Description of Embodiments

Embodiments of the present invention will now be described with reference to the drawings. The embodiments described below exemplify a device and a method for embodying the technical idea of the present invention. The technical idea of the present invention does not specify materials, shapes, structures, arrangement, and the like of constituent components to the following embodiments. The drawings are schematic. Therefore, it should be noted that the relationship between the thickness and the plane dimension, the ratio, and the like are different from realities and the drawings may include portions different in mutual dimensional relationships and ratios.

### (First embodiment)

FIG. 1 illustrates the schematic configuration of an offline heat treatment facility indicating a facility for producing a steel plate according to a first embodiment of the present invention. A heat treatment facility 1 is an offline heat treatment facility and is provided with a heating furnace 2 heating a steel plate S of 100°C or less to an austenite temperature range and a quenching device 3 quenching the steel plate S heated in the heating furnace 2.

Into the heating furnace 2, the steel plate S which is hot-rolled beforehand to predetermined thickness (for example, 30 mm) and width (for example, 2000 mm) in a hot-rolling line (not illustrated) different from the heat treatment facility 1 and from which scale is removed with a surface scale removal device (not illustrated) after the temperature becomes room temperature is charged. Then, in the heating furnace 2, the steel plate S is heated to the austenite temperature range (for example, about 910°C).

The steel plate S extracted from the heating furnace 2 is quenched with a quenching device 3 while being conveyed with a plurality of table rolls 8 installed on the outlet side of the heating furnace 2.

Herein, the quenching device 3 is provided with a slow cooling zone 4 slowly cooling the steel plate S extracted from the heating furnace 2 and a rapid cooling zone 5 rapidly cooling the steel plate S passing through the slow cooling zone 4.

In the slow cooling zone 4, a plurality of pairs (three pairs in this embodiment) of upper slow cooling nozzles 6a and lower slow cooling nozzles 6b vertically forming a pair with respect to the conveying line is disposed side by side at a predetermined pitch along the conveying direction of the steel plate S. Cooling water 12 is ejected toward the steel plate S from the slow cooling nozzles 6a, 6b.

In the rapid cooling zone 5, a plurality of pairs (three pairs in this embodiment) of upper rapid cooling nozzles 7a and lower rapid cooling nozzles 7b vertically forming a pair with respect to the conveying line is disposed side by side at a predetermined pitch along the conveying direction of the steel plate S. Cooling water 13 is ejected toward the steel plate S from the rapid cooling nozzles 7a, 7b.

Herein, the heat treatment facility 1 illustrated in FIG. 1 is not an online type but an offline heat treatment facility in order to reduce a variation in the yield ratio in the steel plate S and produces the steel plate having a low yield ratio (The yield ratio which is a ratio of the yield strength to the tensile strength is 80% or less.) by a single heat treatment process (Heating is performed once.) in order to produce the steel plate S with energy as low as possible to make the energy cost inexpensive.

First, a reason for using the offline heat treatment facility instead of an online type heat treatment facility is described. The largest issue when the online type heat treatment facility is used is a variation in the mechanical characteristics in the same steel plate due to a temperature deviation between the leading end and the trailing end of the steel plate S before cooling. Thus, in order to keep the cooling start temperature over the entire length of the steel plate S constant, the offline heat treatment facility is used instead of the online type, the heating furnace 2 and the quenching device (cooling device) 3 are disposed close to each other, and the steel plate S is quenched with the quenching device 3 substantially simultaneously with the extraction of the steel plate S from the heating furnace 2.

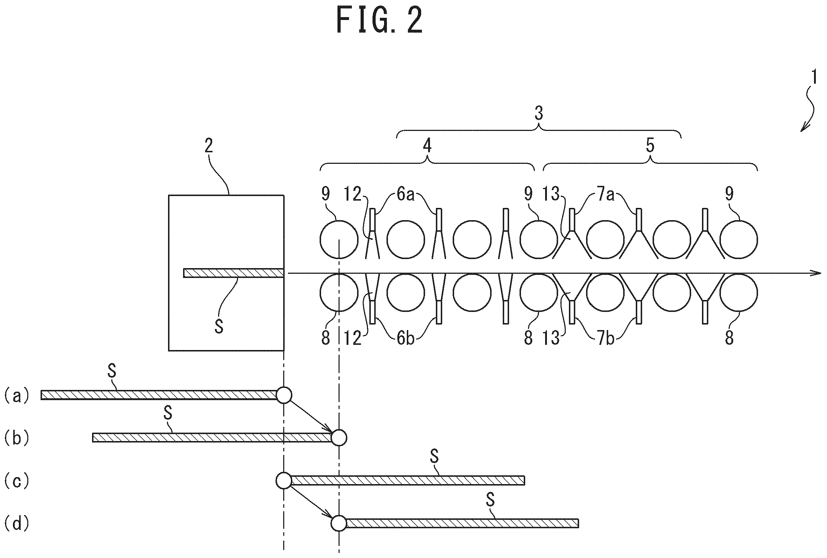

A temperature drop until the leading end and the trailing end of the steel plate enter the slow cooling zone of the quenching device after extracted from the heating furnace is explained with reference to FIG. 2.

In the heating furnace 2, soaking heating is performed so that the steel plate S has a constant temperature. In general, heating can be performed with a temperature deviation in the plate of the steel plate S in the heating furnace 2 of about ±5 to 10°C and the temperature of the steel plate S is increased to the furnace temperature of the heating furnace 2, and therefore the temperature in the furnace of the heating furnace 2 can be kept almost constant to a target temperature. Furthermore, in a case where the distance from the heating furnace 2 to the quenching device 3 is L as illustrated in FIG. 2, it is supposed that the leading end of the steel plate S is extracted from the heating furnace 2 as illustrated in FIG. 2A, the steel plate S is conveyed at a conveying speed V, and the leading end of the steel plate S enters the quenching device 3 as illustrated in FIG. 2B, for example. In this case, after the steel plate S comes out of the heating furnace 2, the temperature drop of the steel plate S starts due to the open air. Therefore, the leading end of the steel plate S is allowed to cool by time L/V in which the leading end of the steel plate S moves by the distance L between the heating furnace 2 and the quenching device 3. On the other hand, also with respect to the trailing end of the steel plate S, it is supposed that the trailing end of the steel plate S is extracted from the heating furnace 2 as illustrated in FIG. 2C, the steel plate S is conveyed at the conveying speed V, and then the trailing end of the steel plate S enters the quenching device 3 illustrated in FIG. 2D. In this case, after the steel plate S comes out of the heating furnace 2, the temperature drop of the steel plate S starts due to the open air. Therefore, the trailing end of the steel plate S is allowed to cool by time L/V in which the leading end of the steel plate S moves by the distance L between the heating furnace 2 and the quenching device 3. Herein, when the conveying speed V of the steel plate S is supposed to be constant, there is no temperature deviation between the leading end and the trailing end of the steel plate S in the heating furnace 2 and the leading end and the trailing end of the steel plate S enter the quenching device 3 after allowed to cool for the same period of time. Therefore, there is no temperature deviation between the leading end and the trailing end of the steel plate S when entering the quenching device 3. Therefore, the temperatures of the leading end and the trailing end of the steel plate S hardly vary in each plate material and cooling can be started at the same temperature for the leading end and the trailing end of the steel plate S. Thus, the cooling start temperature can be kept constant over the entire length of the steel plate S. In order to start the cooling at the same temperature for the leading end and the trailing end of the steel plate S, it is preferable to pass the plate at a constant speed until the trailing end of the steel plate S enters the quenching device 3 after the leading end of the steel plate S comes out of the heating furnace 2.

Next, a reason for configuring the quenching device 3 to be provided with the slow cooling zone 4 slowly cooling the steel plate S extracted from the heating furnace 2 and the rapid cooling zone 5 rapidly cooling the steel plate S having passed through the slow cooling zone 4 is described.

To the steel plate S extracted from the heating furnace 2, slow cooling is carried out in the early stage of the cooling, so that ferrite is first generated by a predetermined fraction, and then rapid cooling is carried out, so that the remaining austenite phase is transformed to a bainite phase or a martensite phase. Thus, the ferrite fraction of the first phase is controlled by a single heat treatment process and the bainite phase or the martensite phase of the second phase is formed. Thus, the ferrite phase which is soft and the bainite phase or the martensite phase which is a hard phase as the structures of the steel plate can be dispersed at an appropriate ratio according to strength and a low yield ratio can be achieved while maintaining tensile strength. Since the offline heat treatment facility 1 is used, the steel plate in which the ferrite fraction does not vary in the plate and the yield ratio does not vary in the same steel plate can be obtained.

FIGS. 3 illustrate schematic views of temperature histories in the surface layer and the center in the plate thickness direction of the steel plate when the quenching device 3 is configured by the slow cooling zone 4 and the rapid cooling zone 5 and cools the steel plate S as described above. FIG. 3A is a figure explaining, using CCT diagrams, the temperature histories and the structure changes of the steel plate in the surface layer and the center in the plate thickness direction of the steel plate when the slow cooling is performed in the early stage of the cooling, and then the rapid cooling is performed when the ferrite fractions in the surface layer and the center in the plate thickness direction of the steel plate reach a predetermined fraction to cool the steel plate to substantially room temperature to form a structure mainly containing martensite as the second phase. The schematic view of the temperature describes a condition that the plate thickness is relatively large (50 mm or more) .

Herein, in the slow cooling in the slow cooling zone 4, when the cooling rate at each position from the surface layer to the center in the plate thickness direction of the steel plate S is adjusted to about 0.4 to 10°C/s and preferably 0.4 to 5°C/s, the ferrite fractions in the surface layer and the center in the plate thickness direction of the steel plate S do not greatly change and an almost constant ferrite fraction over the entire plate thickness direction can be achieved. In the slow cooling in the slow cooling zone 4, in order to control the cooling rate at each position from the surface layer to the center in the plate thickness direction of the steel plate S to 0.4 to 10°C/s, the water amount per unit area of the cooling water in the slow cooling zone 4 (hereinafter referred to as water amount density) is preferably set to 30 to 200 L/ (min·m²). When the water amount density of the cooling water in the slow cooling zone 4 is less than 30 L/ (min·m²), the cooling rate is less than 0.4°C/s which is the lower limit of a target cooling rate and is almost equivalent to that of air cooling, and therefore the productivity remarkably decreases. On the other hand, when the water amount density is larger than 200 L/ (min·m²), there is a possibility that the structure of the second phase, such as bainite, is generated in the slow cooling, and therefore a target ferrite fraction cannot be stably achieved. In order to more uniformly perform the cooling at a low cooling rate, the water amount density is preferably set to 150 L/ (min·m²) or less.

In the rapid cooling in the rapid cooling zone 5, a cooling rate higher than that in the slow cooling may be acceptable. By setting the cooling rate to 4°C/s or more particularly in a central portion in the plate thickness direction where the cooling rate is lowest, the temperatures of the surface layer and the center in the plate thickness direction of the steel plate S can be reduced to a temperature lower than the martensite generation temperature, and thus the structure of the second phase can be configured to mainly contain martensite . In the rapid cooling in the rapid cooling zone 5, in order to set the cooling rate to 4°C/s or more in the central portion in the plate thickness direction where the cooling rate is lowest, the water amount density of the cooling water in the rapid cooling zone 5 is preferably set to 1000 to 4000 L/ (min·m²). In the case where the water amount density is less than 1000 L/(min·m²), particularly when the plate thickness is large (for example, 100 mm), there are problems that a target cooling rate is not achieved and transition boiling occurs, so that temperature unevenness occurs. In order to uniformly perform the cooling while achieving a target cooling rate, the water amount density is preferably set to 1200 L/ (min·m²) or more. On the other hand, when the water amount density is larger than 4000 L/ (min·m²), the cooling rate hardly changes even when the water amount density is further increased, and therefore the water amount density is not preferable from the viewpoint of economical efficiency, such as power of the cooling water.

FIG. 3B is a figure explaining, using CCT diagrams, the temperature histories and the structure changes of the steel plate in the surface layer and the center in the plate thickness direction of the steel plate when the slow cooling is performed in the early stage of the cooling, the rapid cooling is performed when the ferrite fractions in the surface layer and the center in the plate thickness direction of the steel plate reach a predetermined fraction, and then the rapid cooling is stopped when the average temperature in the plate thickness direction of the steel plate becomes a bainite generation temperature, so that a structure mainly containing bainite as the second phase is formed. The schematic view of the temperature describes a condition that the plate thickness is relatively large (50 mm or more).

Herein, in the slow cooling in the slow cooling zone 4, when the cooling rate at each position from the surface layer to the center in the plate thickness direction of the steel plate S is adjusted to about 0.4 to 10°C/s and preferably 0.4 to 5°C/s, the ferrite fractions in the surface layer and the center in the plate thickness direction of the steel plate S do not greatly change and an almost constant ferrite fraction over the entire plate thickness direction can be achieved. Preferably, the cooling rate may be selected so that the temperature deviation (Surface layer - Center in the plate thickness direction) in the plate thickness direction in the end of the slow cooling is 100°C or less. In the subsequent rapid cooling in the rapid cooling zone 5, a cooling rate higher than that of the slow cooling may be acceptable. By performing the cooling at 4°C/s or more in the central portion in the plate thickness direction, and then ending the cooling at a bainite generation temperature (400 to 55°C), the structure of the second phase can be configured to mainly contain bainite.

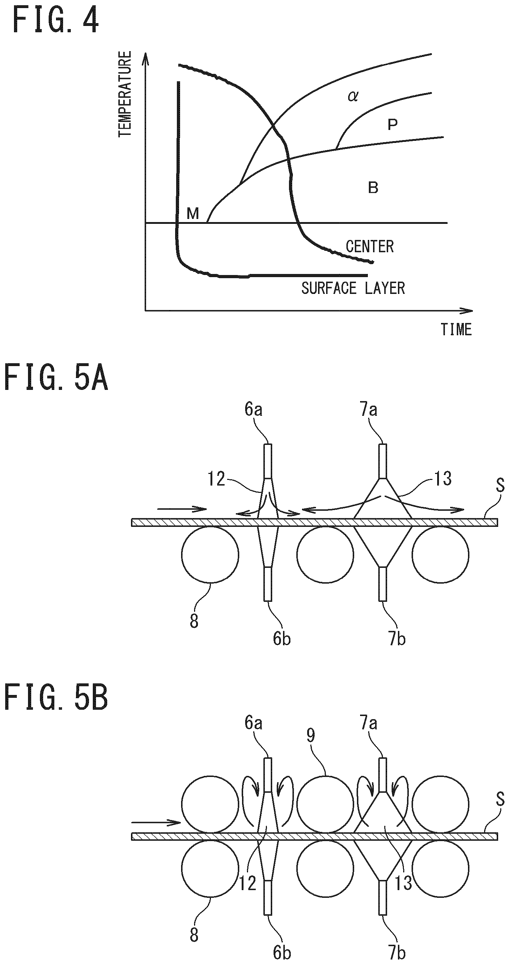

Meanwhile, FIG. 4 is a figure explaining, using CCT diagrams, the temperature histories and the structure changes of the steel plate in the surface layer and the center in the plate thickness direction of the steel plate when cooled by applying a facility for producing a steel plate according to a reference example. The schematic view of the temperature describes a condition that the plate thickness is relatively large (50 mm or more).

In the facility for producing a steel plate according to the reference example, the rapid cooling is carried out from the early stage of the cooling, and the steel plate is cooled until the temperature reaches substantially the water temperature. In this cooling method, the rapid cooling is carried out from the early stage of the cooling, and therefore the cooling rate of the surface of the steel plate S is high in the early stage of the cooling and becomes an almost constant temperature when the surface temperature of the steel plate S reaches near the water temperature. Therefore, the surface layer of the steel plate S does not cause the ferrite transformation but causes the martensite transformation. Therefore, the facility for producing a steel plate according to the reference example cannot form a complex phase structure by a single heat treatment process.

On the other hand, in the facility for producing a steel plate according to this embodiment, the quenching device 3 is configured to be provided with the slow cooling zone 4 slowly cooling the steel plate S extracted from the heating furnace 2 and the rapid cooling zone 5 rapidly cooling the steel plate S having passed through the slow cooling zone 4 as described above. Thus, the steel plate S extracted from the heating furnace 2 is subjected to the slow cooling in the early stage of the cooling, so that ferrite is first generated by a predetermined fraction, and then the rapid cooling is carried out, so that the remaining austenite phase is transformed to a bainite phase or a martensite phase. Thus, the ferrite fraction of the first phase can be controlled by a single heat treatment process and the bainite phase or the martensite phase of the second phase can be formed.

Moreover, in the heat treatment facility 1, a draining device 9 is installed between the upper slow cooling nozzle 6a closest to the outlet side in the slow cooling zone 4 and the upper rapid cooling nozzle 7a closest to the inlet side in the rapid cooling zone 5 as illustrated in FIG. 1 and FIG. 5B. Moreover, a draining devices 9 are also installed on the inlet side of the upper slow cooling nozzle 6a closest to the inlet side in the slow cooling zone 4 and on the outlet side of the upper rapid cooling nozzle 7a closest to the outlet side in the rapid cooling zone 5 as illustrated in FIG. 1. Furthermore, the draining device 9 is also installed between each slow cooling nozzles 6a in the slow cooling zone 4 and between each rapid cooling nozzle 7a in the rapid cooling zone 5 as illustrated in FIG. 1. These draining devices 9 are configured by draining rolls.

A reason for installing the draining device 9 between the upper slow cooling nozzle 6a closest to the outlet side in the slow cooling zone 4 and the upper rapid cooling nozzle 7a closest to the inlet side in the rapid cooling zone 5 is described with reference to FIGS. 5A and 5B.

As illustrated in FIG. 5A, when the draining device 9 is not installed between the upper slow cooling nozzle 6a closest to the outlet side in the slow cooling zone 4 and the upper rapid cooling nozzle 7a closest to the inlet side in the rapid cooling zone 5, the cooling water 12 from the upper slow cooling nozzles 6a and the cooling water 13 from the upper rapid cooling nozzle 7a are mixed. In particular, the flow rate of the cooling water needs to be increased in the point of increasing the cooling rate in the rapid cooling nozzle 7a, and therefore the cooling water 13 from the rapid cooling nozzle 7a enters the slow cooling nozzle 6a side where the flow rate of the cooling water 12 is low, so that there is a tendency that the cooling capacity becomes high immediately under the slow cooling nozzle 6a. Therefore, as illustrated in FIG. 5B, the draining devices 9 are installed between the upper slow cooling nozzles 6a in the slow cooling zone 4 and the upper rapid cooling nozzles 7a in the rapid cooling zone 5. Then, the draining devices 9 restrain the cooling water 12 from the upper slow cooling nozzles 6a and the cooling water 13 from the upper rapid cooling nozzles 7a to avoid mixture of the cooling water 12 from the upper slow cooling nozzles 6a and the cooling water 13 from the upper rapid cooling nozzles 7a, so that stable cooling can be realized.

A reason for installing the draining devices 9 on the inlet side of the upper slow cooling nozzle 6a closest to the inlet side in the slow cooling zone 4 and on the outlet side of the upper rapid cooling nozzle 7a closest to the outlet side in the rapid cooling zone 5 is described.

When cooling the steel plate S by applying the facility for producing a steel plate according to the reference example described in FIG. 4, only cooling to room temperature can be generally performed, and therefore cooling cannot be stopped at 400 to 550°C at which bainite is generated. In a case where the steel plate S is cooled by applying the facility for producing a steel plate according to the reference example, when it is attempted to stop the rapid cooling when the temperature of the steel plate S is within a bainite generation region (around 400°C) as illustrated in FIG. 3B, the cooling water 13 from the rapid cooling nozzle 7a stays particularly on the steel plate S, which causes supercooling in the plane of the steel plate at a site where the staying water is present. Therefore, the cooling cannot be stopped at 400 to 550°C at which bainite is generated. Moreover, on the slow cooling zone 4 side closest to the heating furnace, the staying water flows to the heating furnace 2 side along the top of the steel plate S, and therefore the cooling water enters the heating furnace 2 side, which causes a failure of the heating furnace 2 or causes the occurrence of supercooling in the plane of the steel plate S as with the previously described case. Therefore, by installing the draining devices 9 on the inlet side of the upper slow cooling nozzle 6a closest to the inlet side in the slow cooling zone 4 and on the outlet side of the upper rapid cooling nozzle 7a closest to the outlet side in the rapid cooling zone 5, the draining devices 9 restrain the staying water staying on the steel plate S to prevent the staying water from flowing out to the outside of the quenching device 3, so that the cooling is stopped with sufficient accuracy in the bainite generation region.

Herein, due to the fact that the draining devices 9 are positioned above the conveying line and have a lifting function, the draining devices 9 can restrain the steel plate S of various plate thicknesses with constant pressure force. In order to obtain good draining properties, the surface shape of the steel plate S under cooling is preferably flattened and the pressing force of the draining devices 9 is preferably 4 ton or more, more preferably 6 ton or more, and still more preferably 8 ton or more. Meanwhile, there is a possibility that the draining devices 9 are bent, so that a gap is formed between the steel plate S and the draining device 9 to deteriorate the draining properties, and therefore the pressing force is preferably 20 ton or less.

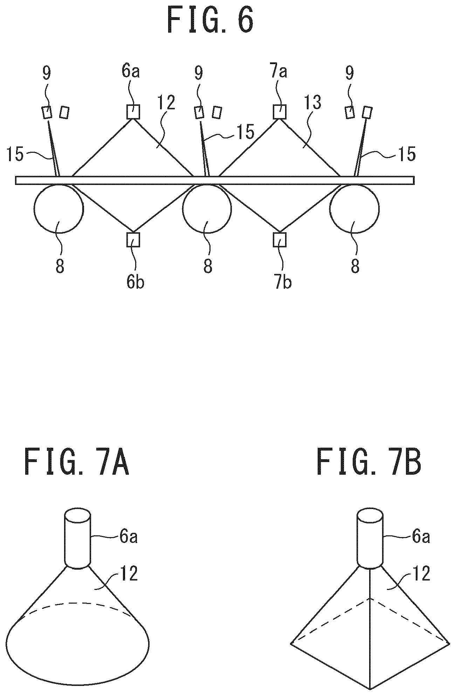

The draining device 9 may be configured by a purge nozzle ejecting purge water 15 and following the cooling water or may be configured by a pneumatic purge instead of the draining roll as illustrated in FIG. 6. However, in order to carry out more stable cooling without leaking the cooling water to the outside of a water cooling application section, the draining roll is preferably used as the draining device 9.

Herein, in order to control the cooling rate to about 0.4 to 10°C/s in the point of generating ferrite in the slow cooling in the slow cooling zone 4, it is suitable to set the water amount density of the cooling water in the slow cooling zone 4 to about 30 to 200 L/(min·m²) as described above. Then, the cooling water amount becomes relatively small as the cooling of the steel plate S in the slow cooling. Therefore, the cooling water ejected from the slow cooling nozzles 6a, 6b to be formed into liquid droplets enters a film boiling state in which a vapor film is generated between the liquid droplets and the steel plates S when colliding with the steel plate S. The film boiling state collapses when the temperature decreases and shifts to so-called nucleate boiling in which the liquid droplets and the steel plate S directly contact with each other, so that the cooling capacity becomes sharply rapid. As the water amount density from the slow cooling nozzles 6a, 6b is higher, the temperature at which the film boiling state shifts to the nucleate boiling (so-called transition temperature) becomes higher, and therefore the temperature range of the film boiling state in which the slow cooling can be performed becomes narrower. Therefore, a spray shape such that the cooling water 12 is ejected and spreads as wide as possible is preferable so that the local water amount density does not become high. From this point, as a cooling form of the cooling water 12 from the slow cooling nozzles 6a, 6b, spray cooling enabling atomization in a wide range with a low water amount density is preferable. Particularly, a full cone (collision shape: circular shape) illustrated in FIG. 7A, an oval (collision shape: ellipse), and square spraying (collision shape: rectangular shape) illustrated in FIG. 7B are preferable. From the point of performing uniform atomization in a range as wide as possible, in the case of the oval, the ratio of the minor axis to the major axis preferably falls in the range of 1:1 to 1:4. Moreover, also in the case of the square spraying, the ratio of the short side to the long side is preferably set within the range of 1:1 to 1:4 as with the oval. Also in so-called mist cooling in which water and air are mixed, equivalent performance can be obtained by appropriately selecting the ratio of the short side to the long side as with the previously described spray.

The transition temperature is affected by oxidation scale generated on the surface of the steel plate S. In general, the transition temperature becomes higher as the scale thickness is larger. When the temperature reaches such a transition temperature during the slow cooling, the surface of the steel plate S is rapidly cooled. Therefore, there is a risk that particularly the cooling rate of the steel plate surface layer is much higher than 0.4 to 10°C/s. Thus, in order to lower the transition temperature and extend the range where the cooling can be performed in the film boiling as much as possible, relatively thick scale generated in the hot-rolling is preferably removed beforehand by a process, such as shot blasting or pickling, in the steel plate before the charging into the heating furnace. Although a general mill scale is about 10 to 50 µm, the thickness of the scale before the charging into the heating furnace can be set to less than 1 µm by shot blasting or pickling. It is preferable to suppress the generation of the scale in the heating furnace 2 by heating the inside of the heating furnace 2 in a nonoxidizing atmosphere, such as nitrogen atmosphere heating. Preferably, the oxygen concentration in the heating furnace 2 is suitably set to less than 1%.

Thus, the generation of the scale until the extraction from the heating furnace 2 can be prevented. However, a hot steel plate is exposed to an air atmosphere after extracted from the heating furnace 2, so that the oxidation scale is generated. Thus, it is suitable to control the conveying speed of the steel plate S so that time until each of the leading end and the trailing end of the steel plate S enters the slow cooling zone 4 after extracted from the heating furnace 2 is less than 120 sec and preferably within 100 sec from the viewpoint of the suppression of the oxidation scale. The conveying speed of a common offline heat treatment is about 2 to 20 mpm. When the minimum conveying speed is set to 2 mpm from the viewpoint of preventing the oxidation scale as much as possible, the distance L from an extraction port of the heating furnace 2 to the slow cooling zone is preferably within 4 m and more suitably within 3.3 m. Therefore, the distance L from the heating furnace 2 to the slow cooling zone 4 is set within 4 m in this embodiment.

In the heat treatment facility 1, a control device 10 is provided which controls the conveying speed of the steel plate S so that the time until each of the leading end and the trailing end of the steel plate S enters the slow cooling zone 4 after extracted from the heating furnace 2 is less than 120 sec as illustrated in FIG. 1.

The control device 10 is connected to the table rolls 8 conveying the steel plate S and connected to a host computer 11 in order to control the conveying speed of the steel plate S, i.e., in order to function as a conveying speed control device. The control device 10 acquires information of the distance L from the heating furnace 2 to the slow cooling zone 4 from the host computer 11 and calculates the conveying speed V of the steel plate S such that the time until each of the leading end and the trailing end of the steel plate S enters the slow cooling zone 4 after extracted from the heating furnace 2 is less than 120 sec based on the distance L, and then controls the rotational speed of the table roll 8 so that the steel plate S is conveyed at the calculated conveying speed V.

The temperature of the steel plate S at the timing of switching the slow cooling in the slow cooling zone 4 to the rapid cooling in the rapid cooling zone 5, i.e., the plate thickness cross-section average temperature of the steel plate S at the end point of the slow cooling zone 4, is suitably set within the range of 550°C to 800°C in order to generate ferrite having a ferrite fraction of at least 10% or more and preferably 20% or more and 80% or less.

In the heat treatment facility 1, the control device 10 also has a function as a slow cooling control device. The control device 10 is connected to the slow cooling nozzles 6a, 6b ejecting the cooling water to the steel plate S. The control device 10 acquires information of a target temperature (target temperature within the range of 550°C to 800°C which is the plate thickness cross-section average temperature at the end point of the slow cooling zone 4) of the steel plate S in addition to information, such as heating temperature and plate thickness, from the host computer 11 and calculates the number of the slow cooling nozzles 6a, 6b (logarithm of the slow cooling nozzles 6a, 6b) ejecting the cooling water, the water amount density of the cooling water in the slow cooling zone 4, and the conveying speed of the steel plate S based on the target temperature. Then, the control device 10 ejects the cooling water toward the steel plate S from the slow cooling nozzles 6a, 6b with the number of the slow cooling nozzles 6a, 6b (logarithm of the slow cooling nozzles 6a, 6b) and the water amount density of the cooling water in the slow cooling zone 4 while conveying the steel plate S at the calculated conveying speed of the steel plate S. Thus, the plate thickness cross-section average temperature of the steel plate S at the end point of the slow cooling zone 4 is set to the target temperature within the range of 550°C to 800°C.

In the rapid cooling in the rapid cooling zone 5, the cooling rate is preferably as high as possible and is controlled to 4°C/s or more at least in the center in the plate thickness direction of the steel plate S in order to transform, in the structure of the steel plate S which is transformed to ferrite from austenite by a certain fraction by the slow cooling, the remaining austenite to bainite or martensite. From this point, the water amount density of the cooling water in the rapid cooling zone 5 is preferably set to about 1000 to 4000 L/(min·m²). In the case where the water amount density is less than 1000 L/(min·m²), particularly when the plate thickness is large (for example, 100 mm), a target cooling rate is not achieved. When the water amount density is larger than 4000 L/(min·m²), the cooling rate hardly changes even when the water amount density is further increased, and therefore the water amount density is not preferable from the viewpoint of economical efficiency, such as power of the cooling water. Furthermore, in the rapid cooling, the cooling capacity becomes low when the previously described film boiling state is set. Therefore, the ejection pressure of the rapid cooling nozzles 7a, 7b is preferably high so that the transition to the nucleate boiling easily occurs and is at least 0.1 MPa or more and preferably 0.3 MPa or more. When the ejection pressure exceeds 1.0 MPa, not only that the power of a pump becomes large but that those having high pressure resistance are required for pipes and the like, which is not economical. Therefore, the ejection pressure is suitably 1.0 MPa or less.

The end temperature of the rapid cooling of the steel plate S, i.e., the plate thickness cross-section average temperature at the end point of the rapid cooling zone 5 of the steel plate S, is suitably within the range of room temperature to 550°C. This is because, when the end temperature of the rapid cooling is higher than 550°C, bainite cannot be stably generated, and therefore a high strength steel plate cannot be obtained.

In the heat treatment facility 1, the above-described control device 10 also has the function as a rapid cooling control device. The control device 10 is connected to the rapid cooling nozzles 7a, 7b ejecting the cooling water to the steel plate S. The control device 10 acquires information of the target temperature (target temperature within the range of room temperature to 550°C which is the plate thickness cross-section average temperature at the end point of the rapid cooling zone 5) of the steel plate S in addition to information, such as heating temperature and plate thickness, from the host computer 11 and calculates the number of the rapid cooling nozzles 7a, 7b (logarithm of the rapid cooling nozzles 7a, 7b) ejecting the cooling water, the water amount density of the cooling water in the rapid cooling zone 5, and the conveying speed of the steel plate S based on the target temperature. Then, the control device 10 ejects the cooling water toward the steel plate S from the rapid cooling nozzles 7a, 7b with the number of the rapid cooling nozzles 7a, 7b (logarithm of the rapid cooling nozzles 7a, 7b) and the water amount density of the cooling water in the rapid cooling zone 5 while conveying the steel plate S at the calculated conveying speed of the steel plate S, and then stops. Thus, the plate thickness cross-section average temperature at the end point of the rapid cooling zone 5 of the steel plate S is stopped at the target temperature within the range of room temperature to 550°C.

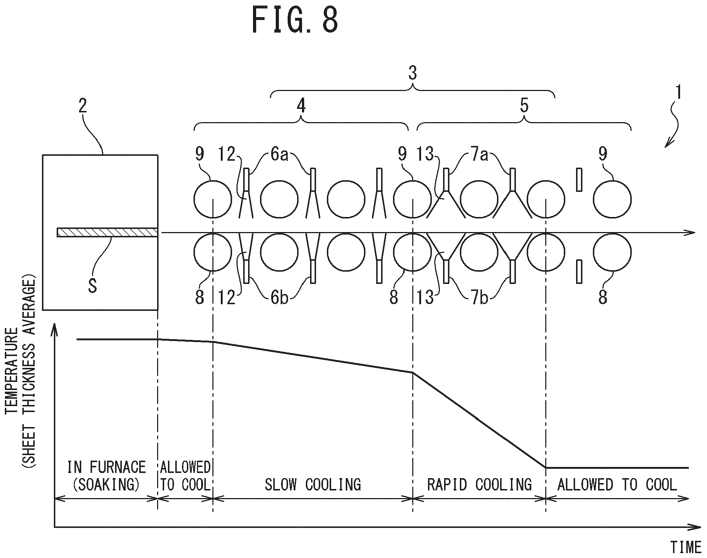

FIG. 8 illustrates average temperature changes in the plate thickness direction of the steel plate when the conveying speed control, the slow cooling control, and the rapid cooling control of the steel plate S are performed by the control device 10, the cooling water 12 is ejected from the three pairs of upper and lower slow cooling nozzles 6a, 6b from the head to the end in the slow cooling zone 4, and then the cooling water 13 is ejected from the two pairs of upper and lower rapid cooling nozzles 7a, 7b from the head and the cooling water 13 is not ejected from the final one pair of upper and lower rapid cooling nozzles 7a, 7b in the rapid cooling zone 5 in the offline heat treatment facility illustrated in FIG. 1.

FIG. 9 illustrates average temperature changes in the plate thickness direction of the steel plate when the conveying speed control, the slow cooling control, and the rapid cooling control of the steel plate S are performed by the control device 10, the cooling water 12 is not ejected from one pair of upper and lower slow cooling nozzles 6a, 6b at the head and the cooling water 12 is ejected from the remaining two pairs of upper and lower slow cooling nozzles 6a, 6b in the slow cooling zone 4, and then the cooling water 13 is ejected from the two pairs of upper and lower rapid cooling nozzles 7a, 7b from the head and the cooling water 13 is not ejected from the final one pair of upper and lower rapid cooling nozzles 7a, 7b in the rapid cooling zone 5 in the offline heat treatment facility illustrated in FIG. 1. In the example of the control illustrated in FIG. 9, the cooling water 12 is not ejected from the one pair of upper and lower slow cooling nozzles 6a, 6b at the head in the slow cooling zone 4 and the cooling time of the steel plate S extracted from the heating furnace 2 is longer than that in the control example of FIG. 8.

FIG. 10 illustrates average temperature changes in the plate thickness direction of the steel plate when the conveying speed control, the slow cooling control, and the rapid cooling control of the steel plate S are performed by the control device 10, the cooling water 12 is ejected from the two pairs of upper and lower slow cooling nozzles 6a, 6b from the head and the cooling water 12 is not ejected from the final one pair of upper and lower slow cooling nozzles in the slow cooling zone 4, and then the cooling water 13 is ejected from the two pairs of upper and lower rapid cooling nozzles 7a, 7b from the head and the cooling water 13 is not ejected from the final one pair of upper and lower rapid cooling nozzles in the rapid cooling zone 5 in the offline heat treatment facility illustrated in FIG. 1. In the example of the control illustrated in FIG. 10, the cooling water 12 is not ejected from the final one pair of upper and lower slow cooling nozzles 6a, 6b in the slow cooling zone 4 and an almost constant temperature can be held by air cooling between the slow cooling and the rapid cooling.

The control examples illustrated in FIG. 8 to FIG. 10 are examples and the control form can be variously altered according to target raw material characteristics (for example, ferrite fraction).

Next, a method for producing a steel plate of the present invention using the heat treatment facility 1 illustrated in FIG. 1 is described.

First, the steel plate S which is hot-rolled beforehand to predetermined thickness (for example, 30 mm) and width (for example, 2000 mm) in a hot-rolling line (not illustrated) different from the heat treatment facility 1 and from which scale is removed with a surface scale removal device (not illustrated) after the temperature becomes room temperature is charged into the heating furnace 2. Then, in the heating furnace 2, the steel plate S is heated to an austenite temperature range (for example, about 910°C) (heating process).

Subsequently, the steel plate S is extracted from the heating furnace 2, and then quenched with a quenching device 3 while being conveyed with two or more of the table rolls 8 installed on the outlet side of the heating furnace 2 (quenching process).

Herein, in this quenching process, the steel plate S extracted from the heating furnace 2 is first slowly cooled by the slow cooling zone 4 of the quenching device 3 disposed within 4 m from the heating furnace 2 (slow cooling process) .

In this slow cooling process, the slow cooling is performed by ejecting the cooling water to the steel plate S from the slow cooling nozzles 6a, 6b in the slow cooling zone 4 where the plurality (three) pairs of upper and lower slow cooling nozzles 6a, 6b is disposed side by side along the conveying direction of the steel plate S.

Herein, the slow cooling is performed by ejecting the cooling water 12 to the steel plate S from the slow cooling nozzles 6a, 6b while setting the water amount density of the cooling water in the slow cooling zone 4 to 30 to 200 L/(min·m²). The slow cooling is performed while controlling the number of the slow cooling nozzles (logarithm of the slow cooling nozzles 6a, 6b) ejecting the cooling water 12, the water amount density of the cooling water in the slow cooling zone 4, and the conveying speed of the steel plate S by the control device 10 so that the plate thickness cross-section average temperature of the steel plate S at the end point of the slow cooling zone 4 is the target temperature within the range of 550°C to 800°C.

Moreover, the control device 10 controls the conveying speed of the steel plate S so that the time until each of the leading end and the trailing end of the steel plate S enters the slow cooling zone 4 after extracted from the heating furnace 2 is less than 120 sec.

Next, in the quenching process, the steel plate S having passed through the slow cooling zone 4 is rapidly cooled by the rapid cooling zone 5 of the quenching device 3 (rapid cooling process).

In this rapid cooling process, the rapid cooling is performed by ejecting the cooling water to the steel plate S from the rapid cooling nozzles 7a, 7b in the rapid cooling zone 5 where the plurality (three) of pairs of upper and lower rapid cooling nozzles 7a, 7b is disposed side by side along the conveying direction of the steel plate S.

Herein, the rapid cooling is performed by ejecting the cooling water 13 to the steel plate S from the rapid cooling nozzles 7a, 7b while setting the water amount density of the cooling water in the rapid cooling zone 5 to 1000 to 4000 L/(min·m²). The rapid cooling is performed by controlling the number of the rapid cooling nozzles (logarithm of the rapid cooling nozzles 7a, 7b) ejecting the cooling water 13, the water amount density of the cooling water in the rapid cooling zone 5, and the conveying speed of the steel plate S by the control device 10 so that the cooling is stopped at the target temperature of the steel plate S in which the plate thickness cross-section average temperature at the end point of the rapid cooling zone 5 is within the range of room temperature to 550°C.

Then, the steel plate S having passed through the quenching process is subjected to a subsequent process.

Thus, according to the method for producing the steel plate S according to the first embodiment of the present invention, the steel plate S extracted from the heating furnace 2 is first slowly cooled in the early stage, so that ferrite is generated by a predetermined fraction, and then the rapid cooling is carried out so that the remaining austenite phase is transformed to a bainite phase or a martensite phase. Thus, the ferrite fraction of the first phase is controlled by a single heat treatment process and the bainite phase or martensite phase of the second phase is formed. Therefore, the ferrite phase which is soft and the bainite phase or the martensite phase which is a hard phase as the structures of the steel plate S can be dispersed at an appropriate ratio according to strength and a low yield ratio can be achieved while maintaining tensile strength. The steel plate S having a low yield ratio can be obtained by the single heat treatment process, and therefore the steel plate S can be produced with energy as small as possible, so that the energy cost can be made inexpensive.

### (Second embodiment)

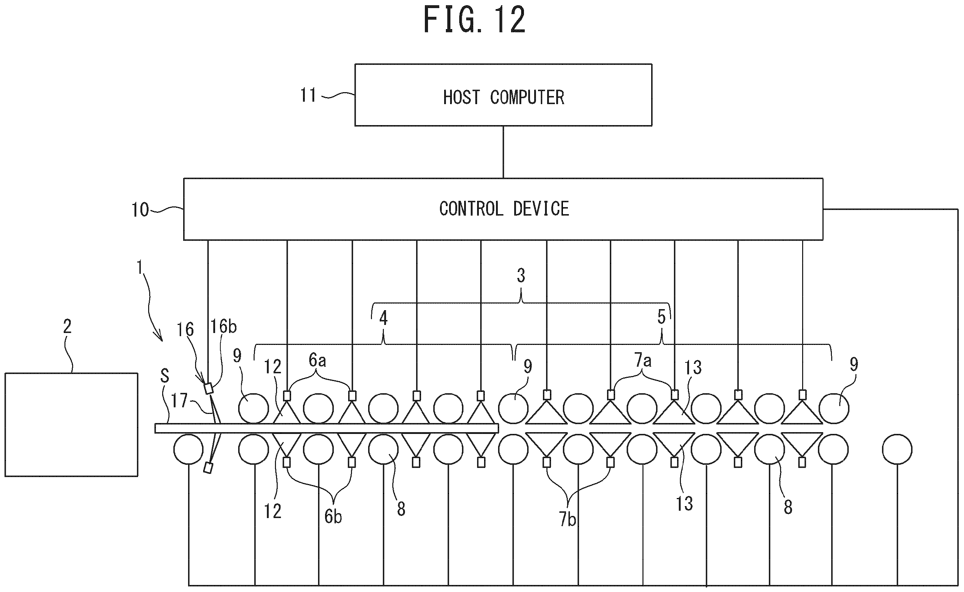

FIG. 12 illustrates the schematic configuration of an offline heat treatment facility indicating a facility for producing a steel plate according to a second embodiment of the present invention. The basic configuration of a heat treatment facility 1 illustrated in FIG. 12 is the same as that of the heat treatment facility illustrated in FIG. 1 but is different from the heat treatment facility illustrated in FIG. 1 in that descaling devices 16 performing descaling to a steel plate S heated in a heating furnace 2 are provided between the heating furnace 2 and a quenching device 3.

In the steel plate S extracted from the heating furnace 2, scale of the front and rear surfaces of the steel plate is removed by the descaling devices 16 while being conveyed by a plurality of table rolls 8 installed on the outlet side of the heating furnace 2. Thus, more uniform cooling of the steel plate S can be realized and the steel plates S having high strength and a low yield ratio which has less variation can be produced.

Then, the steel plate S from which the scale is removed by the descaling devices 16 is cooled with the quenching device 3 while being conveyed by the table rolls 8.

In the offline heat treatment facility 1, by performing the descaling after reheating the hot-rolled steel plate S, the scale of the front and rear surfaces of the steel plate S can be removed even when the energy density of ejection water is low. Therefore, the scale of the front and rear surfaces of the steel plate is removed by ejecting ejection water 17 from the descaling devices 16 to the front and rear surfaces of the steel plate S extracted from the heating furnace 2.

Herein, the energy density (J/mm²) of the ejection water ejected to the steel plate S is an index of the capacity of removing the scale by the descaling and is defined as Water amount density × Ejection pressure × Collision time of the ejection water. The water amount density (m³/(s·mm²)) is a value calculated by Ejection flow rate (m³/s) of ejection water/Collision area (mm²) of ejection water. The ejection pressure (N/m²) is defined by the discharge pressure of the ejection water. The collision time (s) is defined by a value calculated by Collision thickness of ejection water/Conveying speed of steel plate S.

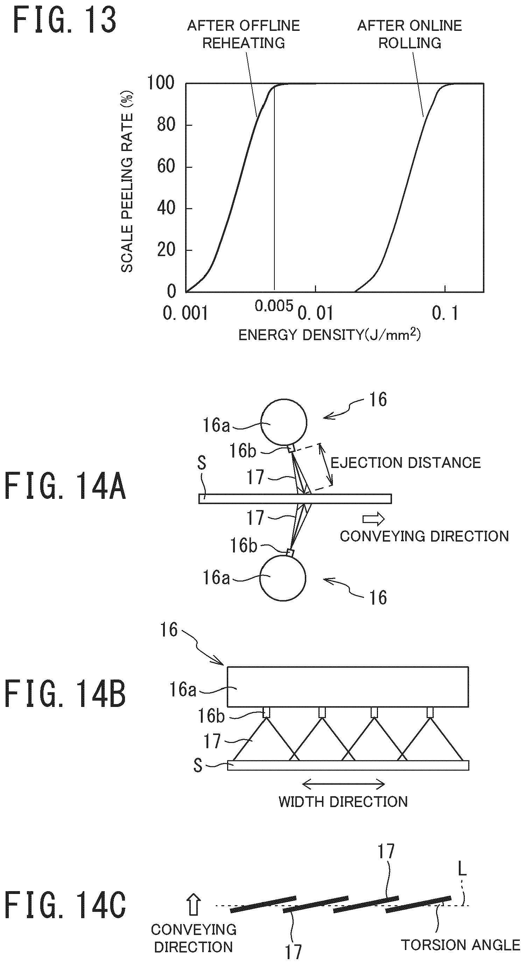

The relationship between the energy density of the ejection water and the scale peeling rate (ratio of the area where the ejection water is ejected to the steel plate S, so that the scale is peeled to the steel plate area) is specifically as illustrated in FIG. 13 when the steel plate S after rolled online and the steel plate S after reheated offline are investigated for the scale peeling situation in the descaling in a certain steel type. After reheated offline, the scale can be peeled at the entire surface of the steel plate S with a low energy density, specifically 0.005 J/mm² or more.

On the other hand, the scale after hot-rolled online is pushed into the steel plate S, and therefore the adhesiveness of the scale to basic iron is high. By causing the ejection water with an energy density of 0.1 J/mm² or more to collide with the steel plate S, the scale can be peeled at the entire surface of the steel plate S. On the other hand, when the steel plate S hot-rolled, and then cooled to 100°C or less is reheated in the heating furnace 2, the scale is peeled in the reheating due to a difference in the thermal expansion between the scale and the steel plate S, and then, after extracted from the heating furnace 2, a state where the scale is peeled from the steel plate S is set. Thus, even when the energy density of descaling water is low, the scale can be uniformly removed. Also with respect to scale generated in the heating furnace 2 or generated after extracted from the heating furnace 2, the scale is not pushed in by rolling and is in a low adhesion strength state. Therefore, the scale can be removed with a low energy density of 0.005 J/mm² or more.

Therefore, in this embodiment, the descaling devices 16 are disposed on the outlet side of the heating furnace 2 to perform descaling to the steel plate S heated in the heating furnace 2. The energy density of the ejection water ejected from the descaling devices 16 is set to 0.005 J/mm² or more. The descaling devices 16 are connected to the control device 10 as illustrated in FIG. 12 through a descaling pump which is not illustrated so that the control device 10 controls the water amount density, the ejection pressure, and the collision time of the ejection water so that the energy density of the ejection water ejected from the descaling device 16 is 0.005 J/mm² or more. Moreover, the control device 10 controls the ejection pressure of the ejection water ejected from the descaling devices 16 to 0.5 MPa or more as described later.

By removing the scale beforehand with a descaling mechanism, e.g., in a process, such as shot blasting or pickling, for example, before charging the steel plate S into the heating furnace 2 to set the scale thickness before charging the steel plate S into the heating furnace 2 to less than 1 µm, the scale can be more uniformly and easily removed. Furthermore, the scale can be easily removed by suppressing the generation of the scale in the heating furnace 2 by heating the inside of the heating furnace 2 in a nonoxidizing atmosphere, such as a nitrogen atmosphere. Therefore, the oxygen concentration in the heating furnace 2 is preferably set to less than 1%.

In order to remove the scale at the entire surface of the steel plate S, the energy density of the ejection water ejected from the descaling devices 16 is preferably set to 0.008 J/mm² or more and more preferably 0.01 J/mm² or more. When the energy density of the ejection water is excessively large, a high-pressure pump or high-pressure piping is required, which increases the facility cost. Therefore, the energy density of the ejection water is preferably set to 0.05 J/mm² or less.

Herein, the descaling devices 16 are installed upward and downward with respect to the steel plate S conveyed on the conveying line as illustrated in FIG. 14A. Each descaling device 16 is provided with a descaling header 16a connected to the descaling pump which is not illustrated and a plurality of descaling nozzle 16b provided in the descaling header 16a. The ejection water 17 is ejected toward the front surface or the rear surface of the steel plate S from each descaling nozzle 16b, so that scale generated on the front surface or the rear surface of the steel plate S is removed. The energy density of the ejection water 17 is set to 0.005 J/mm² or more as described above.

The plurality of descaling nozzles 16b is installed in the descaling header 16a extending in the width direction of the steel plate S at a predetermined pitch along the width direction as illustrated in FIG. 14B (FIG. 14B illustrates only the upper descaling device 16.). Each descaling nozzle 16b is disposed while being imparted with a torsion angle so that the ejection water 17 from the descaling nozzles 16b adjacent to each other as illustrated in FIG. 14C do not collide with each other in the air as illustrated in FIG. 14C. Herein, the torsion angle is an angle formed by a line L extending in the width direction of the steel plate S orthogonal to the conveying direction of the steel plate S and the ejection water 17. Each descaling nozzle 16b is disposed so that the torsion angle is specifically 2° or more and 20° or less.

When the ejection distance (see FIG. 14A) from the front surface or the rear surface of the steel plate S to an ejection port of each descaling nozzle 16b is excessively long, the speed of ejected liquid droplets decreases during flying, and therefore the scale removal capacity decreases. When the relationship between the liquid droplet speed and the ejection distance is investigated for various ejection pressures, the relationship is as illustrated in FIG. 15. The ejection pressure of the ejection water from the descaling device 16 in this embodiment is low as compared with the ejection pressure of the ejection water from a common descaling device after hot-rolling online. Therefore, the decrease of the liquid droplet speed is small and the influence of the ejection distance is low. However, the ejection distance of the ejection water from the descaling devices 16 in this embodiment is preferably 600 mm or less and more preferably 400 mm or less. However, when the descaling devices 16 excessively approach the front surface or the rear surface of the steel plate S, the descaling nozzles 16b collide with the steel plate S to damage the descaling nozzles 16b. Therefore, the ejection distance is preferably set to 40 mm or more.

By removing the scale generated on the front surface and the rear surface of the steel plate S with the descaling devices 16 before cooling the steel plate S with the quenching device 3, the steel plate S can be uniformly cooled with the quenching device 3, so that a low yield ratio heat-treated steel plate having high strength and having uniform quality in the plate of the steel plate S and less variation particularly in the yield ratio can be produced.

As illustrated in FIG. 17, the transition boiling temperature is lowered as the scale thickness is smaller. Therefore, the temperature range of the film boiling state in which the slow cooling described later in the quenching device 3 can be performed is widened (see FIG. 16) and the steel plate S can be uniformly cooled without causing the transition boiling, so that the steel plate S having less variation in the strength or the yield ratio in the steel plate S can be produced.

The ejection pressure of the ejection water ejected from the descaling devices 16 may be 0.5 MPa or more. Thus, the slow cooling by the slow cooling zone 4 can be started at a target cooling start temperature without excessively cooling the steel plate S by the descaling. Thus, the ferrite fraction can be controlled with sufficient accuracy and a low yield ratio heat-treated steel plate having high strength and having less variation in the yield ratio can be produced. When the steel plate S is water-cooled, the cooling capacity (Heat flux × Water cooling time) is proportional to about 0.7th power of the water amount density and inversely proportional to the conveying speed. Therefore, the cooling capacity is greatly influenced by the water amount density or the conveying speed and is hardly influenced by the ejection pressure.

On the other hand, when the ejection pressure is low, it is necessary to increase the water amount density or to reduce the conveying speed in order to secure the energy density of the ejection water of 0.005 J/mm² or more. However, the cooling capacity by the descaling increases and the cooling start temperature decreases. When the energy density of the ejection water of 0.005 J/mm² or more is secured at the ejection pressure of the ejection water of less than 0.5 MPa, the cooling capacity of the descaling increases and, particularly when the plate thickness is large (for example, 10 mm), the slow cooling cannot be started at a target cooling start temperature, the ferrite fraction deviates from the target ferrite friction, and the yield ratio varies.

In the heat treatment facility 1 illustrated in FIG. 12, a draining device 9 is installed between an upper slow cooling nozzle 6a closest to the outlet side in a slow cooling zone 4 and an upper rapid cooling nozzle 7a closest to the inlet side in a rapid cooling zone 5. Moreover, the draining devices 9 are also installed on the inlet side of the upper slow cooling nozzle 6a closest to the inlet side in the slow cooling zone 4 and on the outlet side of the upper rapid cooling nozzle 7a closest to the outlet side in the rapid cooling zone 5. Furthermore, the draining device 9 is also installed between each upper slow cooling nozzle 6a in the slow cooling zone 4 and between each upper rapid cooling nozzle 7a in the rapid cooling zone 5.

Next, a method for producing a steel plate using the heat treatment facility 1 illustrated in FIG. 12 is described.

First, the steel plate S which is hot-rolled beforehand to predetermined thickness (for example, 15 mm), width (for example, 3000 mm), and length (for example 15 m) in a hot-rolling line (not illustrated) different from the heat treatment facility 1 and from which scale is removed with a scale removal mechanism (not illustrated) after the temperature becomes room temperature is charged into the heating furnace 2. Then, the steel plate S is heated to an austenite temperature range (for example, about 910°C) (heating process) in the heating furnace 2.

Subsequently, the steel plate S heated in the heating furnace 2 and extracted from the heating furnace 2 is subjected to descaling with the descaling devices 16 (descaling process).

In this descaling process, the descaling is performed by ejecting the ejection water 17 from the descaling devices 16 to the front surface and the rear surface of the steel plate S while setting the energy density of the ejection water 17 ejected from the descaling devices 16 to 0.005 J/mm² or more.

In the descaling process, the descaling is performed by ejecting the ejection water 17 from the descaling devices 16 to the front surface and the rear surface of the steel plate S while setting the energy pressure of the ejection water 17 ejected from the descaling devices 16 to 0.5 MPa or more.

Subsequently, the steel plate S subjected to the descaling in the descaling process is cooled with the quenching device 3 (quenching process).

In this quenching process, the steel plate S descaled with the descaling devices 16 are first slowly cooled by the slow cooling zone 4 of the quenching device 3 disposed within 4 m from the heating furnace 2 while setting the time until the steel plate S enters the quenching device 3 after the completion of the heating process to 120 seconds or less (slow cooling process).

In this slow cooling process, the slow cooling is performed by ejecting the cooling water 12 to the steel plate S from the slow cooling nozzles 6a, 6b in the slow cooling zone 4 where the plurality of pairs of upper and lower slow cooling nozzles 6a, 6b is disposed side by side along the conveying direction of the steel plate S.

Herein, in the slow cooling process, the slow cooling is performed by ejecting the cooling water 12 to the steel plate S from the slow cooling nozzles 6a, 6b while setting the water amount density of the cooling water in the slow cooling zone 4 to 30 to 200 L/ (min·m²). The slow cooling is performed while controlling the number of the slow cooling nozzles 6a, 6b (logarithm of the slow cooling nozzles 6a, 6b) ejecting the cooling water 12, the water amount density of the cooling water in the slow cooling zone 4, and the conveying speed of the steel plate S by the control device 10 so that the plate thickness cross-section average temperature of the steel plate S at the end point of the slow cooling zone 4 is the target temperature within the range of 550°C to 800°C.

Next, in the quenching process, the steel plate S having passed through the slow cooling zone 4 is rapidly cooled by the rapid cooling zone 5 of the quenching device 3 (rapid cooling process).

In this rapid cooling process, the rapid cooling is performed by ejecting the cooling water to the front surface and the rear surface of the steel plate from the rapid cooling nozzles 7a, 7b in the rapid cooling zone 5 where the plurality of pairs of upper and lower rapid cooling nozzles 7a, 7b is disposed side by side along the conveying direction of the steel plate S.

Herein, in the rapid cooling process, the rapid cooling is performed by ejecting the cooling water 13 to the steel plate S from the rapid cooling nozzles 7a, 7b while setting the water amount density of the cooling water in the rapid cooling zone 5 to 1000 to 4000 L/(min·m²). The rapid cooling is performed while controlling the number of the rapid cooling nozzles (logarithm of the slow cooling nozzles 7a, 7b) ejecting the cooling water 13, the water amount density of the cooling water in the rapid cooling zone 5, and the conveying speed of the steel plate S by the control device 10 so that the plate thickness cross-section average temperature at the end point of the rapid cooling zone 5 of the steel plate S stops at the target temperature within the range of room temperature to 550°C.

Then, the steel plate S having passed through the quenching process is subjected to a subsequent process.

Thus, according to the method for producing the steel plate S of the second embodiment of the present invention, the descaling is performed to the steel plate S extracted from the heating furnace 2 with the descaling devices 16, and then, before the steel plate S is cooled with the quenching device 3, the scale generated on the front surface and the rear surface of the steel plate S is removed. Thus, the steel plate S can be uniformly cooled with the quenching device 3.

Then, the hot-rolled steel plate S is reheated, and then descaled, whereby the scale removal can be achieved while setting the energy density of the ejection water 17 ejected from the descaling devices 16 to a low energy density of 0.005 J/mm² or more. Therefore, uniform descaling can be performed without requiring a large quantity of energy in the descaling before the cooling.

Then, the steel plate S descaled by the descaling devices 16 is subjected to the slow cooling in the cooling early stage, so that ferrite is first generated by a predetermined fraction, and then the rapid cooling is carried out, so that the remaining austenite phase is transformed to a bainite phase or a martensite phase. Thus, the ferrite fraction of the first phase is controlled by a single heat treatment process and the bainite phase or the martensite phase of the second phase is formed. Thus, the ferrite phase which is soft and the bainite phase or the martensite phase which is a hard phase as the structures of the steel plate can be dispersed at an appropriate ratio according to strength and a low yield ratio can be achieved while maintaining tensile strength. Since the off-line heat treatment facility 1 is used, the steel plate in which the ferrite fraction does not vary in the plate and the yield ratio does not vary in the same steel plate can be obtained.

As described above, the embodiments of the present invention are described but the present invention can be variously altered and modified without being limited thereto.

For example, in the slow cooling zone 4, the slow cooling nozzles 6a, 6b may include at least a pair of upper and lower slow cooling nozzles 6a, 6b and are not limited to the three pairs as in the embodiments.

Moreover, in the rapid cooling zone 5, the rapid cooling nozzles 7a, 7b may include at least a pair of upper and lower slow cooling nozzles 7a, 7b and are not limited to the three pairs as in the embodiments.

Moreover, in the heat treatment facilities 1 according to the first embodiment and the second embodiment, the draining device 9 may be installed between the upper slow cooling nozzle 6a closest to the outlet side in the slow cooling zone 4 and the upper rapid cooling nozzle 7a closest to the inlet side in the rapid cooling zone 5 and is not always required to be installed on the inlet side of the upper slow cooling nozzle 6a closest to the inlet side in the slow cooling zone 4 and on the outlet side of the upper rapid cooling nozzle 7a closest to the outlet side in the rapid cooling zone 5 and between each upper slow cooling nozzle 6a in the slow cooling zone 4 and each upper rapid cooling nozzle 7a in the rapid cooling zone 5.

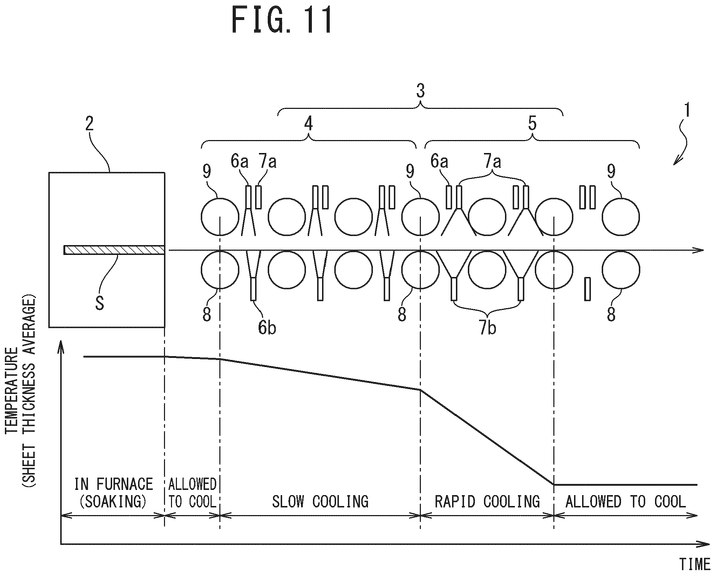

Moreover, the slow cooling may be performed in the slow cooling zone 4 and the rapid cooling may be performed in the rapid cooling zone 5 by installing both the slow cooling nozzles 6a and the rapid cooling nozzles 7a between the draining devices 9 in the slow cooling zone 4 and the rapid cooling zone 5 as illustrated in FIG. 11 and selecting either the slow cooling or the rapid cooling as appropriate according to the target characteristics of the steel plate S.

Moreover, the surface temperature of the steel plate S can also be measured by installing a radiation thermometer between the heating furnace 2 and the quenching device 3 and on the outlet side of the quenching device 3. Thus, the internal temperature of the steel plate S can also be predicted by a calculator based on the results of the surface temperature of the steel plate S.

### EXAMPLES

In order to verify the effects of the present invention, steel plates S in a room temperature state (Plate thickness of 12 mm, 50 mm, 100 mm, Plate width of 3500 mm, Plate length of 7 m) from which scale was removed by shot blasting processing beforehand was heated in a nitrogen atmosphere to 930°C in the heating furnace 2, and then quenched with the quenching device 3 located at a position 2.75 m apart from the heating furnace 2 in the heat treatment facility 1 illustrated in FIG. 12 as Examples 1 to 7. Herein, the number of pairs of upper cooling nozzles and lower cooling nozzles (Number of pairs of upper and lower nozzles ejecting cooling water) in the slow cooling zone 4 and the rapid cooling zone 5 was as illustrated in Table 1.

The descaling devices 16 have the plurality of descaling nozzle 16b arranged in the width direction as illustrated in FIGS. 14, an ejection distance of 400 mm, a torsion angle of 10°, and a spray emission width by a single nozzle of 150 mm and were installed at a position 2.0 m apart from the heating furnace 2. However, the descaling device 16 was not used in Examples 1 to 7 and Comparative Examples 1 to 6.

Herein, the logarithm of the slow cooling nozzles 6a, 6b, the water amount density of the cooling water in the slow cooling zone 4, and the conveying speed of the steel plate S were set so that the plate thickness cross-section average temperature at the end point of the slow cooling zone 4 of the steel plate S was 700±25°C. Moreover, the logarithm of the rapid cooling nozzles 7a, 7b, the water amount density of the cooling water in the rapid cooling zone 5, and the conveying speed of the steel plate S were set so that the plate thickness cross-section average temperature (rapid cooling end temperature) at the end point of the rapid cooling zone 5 of the steel plate S was 400±25°C. With respect to the three kinds of plate thicknesses, the water amount density of the cooling water in the slow cooling zone 4 was set to 30 to 200 L/(min·m²) so that the cooling rate in the slow cooling was 0.4 to 10°C/s with respect to the surface layer. The water amount density of the cooling water in the rapid cooling zone 5 was set to 1000 to 1500 L/(min·m²)so that the cooling rate in the rapid cooling was 4°C/s or more in a central portion in the plate thickness direction.

In Examples 1 to 7, the distance from the heating furnace 2 to the slow cooling zone 4 was set to 2.75 m and the conveying speed of the steel plate S was set so that the time until each of the leading end and the trailing end of the steel plate S enters the slow cooling zone 4 after extracted from the heating furnace 2 was less than 120 sec. The surface temperature of the steel plate S was measured by installing a radiation thermometer between the heating furnace 2 and the quenching device 3 and on the outlet side of the quenching device 3, and then the average and central temperatures in the plate thickness direction of the steel plate S were calculated by a calculator based on the results of the surface temperature of the steel plate S.

A raw material of the steel plate to be cooled is one which was heated to 930°C and then cooled to 700°C at a cooling rate of 5°C/s in a heat cycle test of a small sample carried out in a laboratory, and then subjected to a test of performing cooling to 400°C at a cooling rate of 15°C/s to have a structure of ferrite + bainite and a yield ratio of 75%. Therefore, in Examples 1 to 7, although a target structure of the steel plate S is ferrite + bainite, it is confirmed from the other tests that the characteristics do not greatly deteriorate even when the structure is ferrite + martensite in one part in the plate thickness direction (for example, near the surface layer). Therefore, when a steel plate is produced with an actual heat treatment facility by the same heat history as the heat history described above, it is expected that a mixed phase structure of ferrite + bainite is generated and the yield ratio is 75%, which are set as the target structure and low yield ratio in Examples 1 to 3. The yield ratio of 80% or less is determined to be good.

In order to produce a steel plate having less material variation, a temperature deviation in the plane of the steel plate on the outlet side in the rapid cooling zone 5 was required to be suppressed within 30°C. The temperature deviation in the plane of the steel plate was evaluated as a value obtained by subtracting the maximum value and the minimum value among the steel plate surface temperatures measured for the entire steel plate surface using a scanning radiation thermometer installed on the outlet side in the rapid cooling zone 5.

The results are illustrated in Examples 1 to 7 of Table 1. When the time until the steel plate S enters the slow cooling zone 4 after extracted from the heating furnace 2, the distance from the heating furnace 2 to the slow cooling zone 4, and the water amount density of the cooling water in the slow cooling zone 4 and the rapid cooling zone 5 were set within the ranges of the present invention, the cooling rate of the surface layer in the slow cooling and the cooling rate in the center in the plate thickness direction in the rapid cooling fell in the ranges (0.4 to 10°C/s in the slow cooling, 4°C/s or more in the rapid cooling) recommended by the present invention and the structure of the steel plate S was ferrite + bainite as targeted in the center in the plate thickness direction. When the plate thicknesses of the steel plates S are large and 50 mm (Examples 2 and 4 to 6) and 100 mm (Examples 3 and 7), the structure of the steel plates S was slightly different from the target structure near the surface layer and ferrite + martensite were formed. However, all the cases achieved 80% or less of the target yield ratio. Furthermore, in Examples 1 to 7, the temperature deviation in the plane of the steel plate was within 30°C, so that the steel plate having high strength and a low yield ratio and having less material variation was able to be produced.

**[Table 1]**

| | Plate thickness (mm) | Heating furnace to cooling zone Time (sec) | Heating furnace to cooling zone Distance (m) | Conveying speed (mpm) | Water amount density of cooling water (L/min·m²) | | Number of used pair of upper and lower nozzles in each cooling zone | | Descaling | Cooling rate (°C/s) | | Slow cooling end temperature (Surface/ Average) (°C) | Rapid cooling end temperature (Average) (°C) Temperature difference (°C) | Structure Center in sheet thickness/Surface layer | Temperature deviation in plane of steel plate (Surface) | | Yield ratio (%) | |
|---|---|---|---|---|---|---|---|---|---|---|---|---|---|---|---|---|---|---|
| | | | | | Slow cooling | Rapid cooling | Slow cooling | Rapid cooling | | Slow cooling (Surface layer) | Rapid cooling (1/2 t) | | | | Temperature difference (°C) | Evaluation | Result | Evaluation |
| Ex. 1 | 12 | 8.7 | 2.75 | 19 | 150 | 1200 | 9 | 2 | Not used | 9.5 | 67.7 | 701 | 401 | α+B/α+B | 17 | ○ | 75 | ○ |
| Ex. 2 | 50 | 39.3 | 2.75 | 4.2 | 70 | 1200 | 17 | 2 | Not used | 1.1 | 14.8 | 680 | 400 | α+B/α+M | 15 | ○ | 74 | ○ |
| Ex. 3 | 100 | 82.5 | 2.75 | 2 | 30 | 1200 | 22 | 3 | Not used | 0.4 | 4.6 | 708 | 415 | α+B/α+M | 14 | ○ | 77 | ○ |
| Ex. 4 | 50 | 27.5 | 2.75 | 6 | 200 | 1200 | 9 | 3 | Not used | 6.0 | 14.3 | 702 | 395 | α+B/α+M | 25 | ○ | 76 | ○ |
| Ex. 5 | 50 | 28.0 | 2.75 | 5.9 | 150 | 1000 | 11 | 3 | Not used | 4.3 | 13.8 | 704 | 400 | α+B/α+M | 22 | ○ | 75 | ○ |
| Ex. 6 | 50 | 37.5 | 2.75 | 4.4 | 150 | 1500 | 8 | 2 | Not used | 4.3 | 15.3 | 703 | 397 | α+B/α+M | 18 | ○ | 78 | ○ |
| Ex. 7 | 100 | 117.9 | 2.75 | 1.4 | 30 | 1200 | 16 | 2 | Not used | 0.4 | 4.6 | 704 | 400 | α+B/α+M | 23 | ○ | 78 | ○ |
| Comp. Ex. 1 | 12 | 8.7 | 2.75 | 19 | - | 1200 | None | 4 | Not used | - | 69.1 | - | 400 | B/B | 18 | ○ | 85 | × |
| Comp. Ex. 2 | 50 | 39.3 | 2.75 | 4.2 | - | 1200 | None | 4 | Not used | - | 16.7 | - | 380 | B/M | 17 | ○ | 90 | × |
| Comp. Ex. 3 | 100 | 82.5 | 2.75 | 2 | - | 1200 | None | 5 | Not used | - | 4.7 | - | 410 | B/M | 17 | ○ | 82 | × |
| Comp. Ex. 4 | 50 | 25.8 | 2.75 | 6.4 | 220 | 1200 | 9 | 3 | Not used | 12.7 | 12.8 | 550 | 290 | B/M | 40 | × | 91 | × |
| Comp. Ex. 5 | 50 | 28.4 | 2.75 | 5.8 | 150 | 900 | 11 | 3 | Not used | 4.3 | 13.5 | 701 | 430 | α+B/α+M | 36 | × | 80 | ○ |
| Comp. Ex. 6 | 100 | 135.0 | 4.5 | 2 | 30 | 1200 | 22 | 3 | Not used | 1.3 | 3.8 | 565 | 316 | B/M | 42 | × | 85 | × |

On the other hand, in Table 1, Comparative Examples 1 to 3 are examples in which the slow cooling was not carried out. In Comparative Examples 1 to 3, the slow cooling was not carried out, and therefore ferrite was not generated and bainite or martensite was generated over the entire plate thickness direction as the structure of the steel plate S. Therefore, the yield ratio was 80% or more in all the cases.

Comparative Example 4 is an example in which the water amount density of the cooling water in the slow cooling zone 4 was set to 250 L/(min·m²). In Comparative Example 4, the water amount density exceeded 200 L/(min·m²), and therefore the transition boiling occurred in the slow cooling, the surface layer cooling rate of the slow cooling became 12.7°C, and the yield ratio became 91% and further the temperature deviation in the plane of the steel plate became as large as 40°C.

Comparative Example 5 is an example in which the water amount density of the cooling water in the rapid cooling zone 5 was set to 900 L/(min·m²). In Comparative Example 5, the water amount density was 1000 L/(min·m²)or less, and therefore the transition boiling occurred during the rapid cooling, so that the yield ratio was 80% but the temperature deviation in the plane of the steel plate became as large as 36°C.

Comparative Example 6 is an example in which the distance from the heating furnace 2 to the slow cooling zone 4 was set to 4.5 m, the conveying speed of the steel plate S was set to 2.0 mpm, and the time until the steel plate S enters the slow cooling zone 4 after extracted from the heating furnace 2 was set to 135 sec, which was made longer than less than 120 sec which is the recommendation range of the present invention. In Comparative Example 6, a period of time while the steel plate was exposed to the air atmosphere was long, scale generated on the surface of the steel plate S was thick, the transition boiling occurred in the slow cooling, and the temperature deviation in the plane of the steel plate was as large as 42°C and further the end temperatures of the slow cooling and the rapid cooling greatly deviated from target temperatures 700±25°C and 400±25°C and the yield ratio became 85%.

Next, Table 2 illustrates results of carrying out descaling to the steel plate S extracted from the heating furnace 2 using the descaling devices 16.

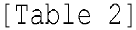

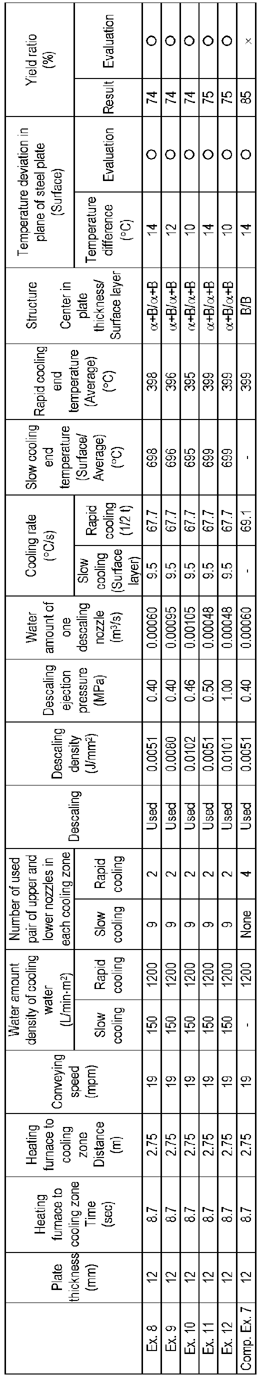

Examples 8 to 12 are examples in which the descaling was performed while setting the energy density of the ejection water ejected from the descaling devices 16 to 0.005 J/mm² or more, and then cooling was performed with the water amount density within the range of the present invention in the slow cooling zone 4 and the rapid cooling zone 5. In this case, the temperature deviation in the plane of the steel plate was able to be made as small as 10 to 14°C while achieving a yield ratio of 80% or less. In particular, in Examples 9 and 10, the energy density of the ejection water ejected from the descaling devices 16 was as large as 0.0080 J/mm² or 0.0102 J/mm², and therefore scale was uniformly removed at the entire surface of the steel plate, the temperature deviation in the plane of the steel plate became small, and a steel plate having high strength and a low yield ratio and having less material variation was able to be produced. In Example 11, the ejection pressure of the ejection water ejected from the descaling devices 16 was 0.5 MPa, and therefore an energy density of 0.005 J/mm² was able to be secured without lowering the conveying speed or increasing the water amount of the ejection water. As a result, the temperature drop by the descaling can be suppressed and the slow cooling was able to be started without lowering the cooling start temperature, and therefore the ferrite fraction was achieved as targeted and the yield ratio was 75% as targeted. In Example 12, the ejection pressure of the ejection water ejected from the descaling devices 16 was further high and 1.0 MPa, and therefore an energy density of 0.0101 J/mm² was able to be secured without lowering the conveying speed or increasing the water amount of the ejection water. As a result, the ferrite fraction was achieved as targeted and the yield ratio was 75% as targeted and further the temperature deviation in the plane of the steel plate was able to be made as small as 10°C.

On the other hand, in Comparative Example 7, the descaling was performed while setting the energy density of the ejection water ejected from the descaling device 16 to 0.005 J/mm² or more but thereafter cooling was not carried out in the slow cooling zone 4. In this case, ferrite was not generated and bainite was generated over the entire plate thickness direction as the structure of the steel plate. Therefore, the yield ratio became 85%.

### Reference Signs List

1 offline heat treatment facility (facility for producing steel plate)
2 heating furnace
3 quenching device
4 slow cooling zone
5 rapid cooling zone
6a upper slow cooling nozzle
6b lower slow cooling nozzle
7a upper rapid cooling nozzle
7b lower rapid cooling nozzle
8 table roll
9 draining device
10 control device (conveying speed control device, slow cooling control device, rapid cooling control device)
11 host computer
12 cooling water from slow cooling nozzle
13 cooling water from rapid cooling nozzle
15 purge water
16 descaling device
16a descaling header
16b descaling nozzle
17 ejection water
S steel plate

## Claims

1. A facility for producing a steel plate comprising:
a heating furnace configured to heat a steel plate of 100°C or less to an austenite temperature range; and
a quenching device configured to quenching the steel plate heated in the heating furnace,
wherein, the quenching device includes
a slow cooling zone configured to slowly cool the steel plate extracted from the heating furnace and
a rapid cooling zone configured to rapidly cool the steel plate having passed through the slow cooling zone,
wherein, in the slow cooling zone, at least a pair of upper and lower slow cooling nozzles is disposed along a conveying direction of the steel plate and, in the rapid cooling zone, at least a pair of upper and lower rapid cooling nozzles is disposed along the conveying direction of the steel plate, and
wherein, a draining device is disposed between the upper slow cooling nozzle in the slow cooling zone and the upper rapid cooling nozzle in the rapid cooling zone, and a distance from the heating furnace to the slow cooling zone is set to be within 4 m.

2. The facility for producing a steel plate according to Claim 1, wherein
a water amount density of cooling water in the slow cooling zone is 30 to 200 L/(min·m²)and a water amount density of cooling water in the rapid cooling zone is 1000 to 4000 L/(min·m²).

3. The facility for producing a steel plate according to Claim 1 or 2 comprising:
a conveying speed control device configured to control a conveying speed of the steel plate so that time until each of a leading end and a trailing end of the steel plate enters the slow cooling zone after extracted from the heating furnace is less than 120 sec.

4. The facility for producing a steel plate according to any one of Claims 1 to 3 comprising:
a descaling device configured to perform descaling to the steel plate heated in the heating furnace between the heating furnace and the quenching device, wherein
an energy density of ejection water ejected from the descaling device is set to 0.005 J/mm² or more.

5. The facility for producing a steel plate according to Claim 4, wherein
an ejection pressure of the ejection water ejected from the descaling device is 0.5 MPa or more.

6. The facility for producing a steel plate according to any one of Claims 1 to 5 comprising:
a slow cooling control device configured to control a number of the slow cooling nozzles ejecting the cooling water, a water amount density of the cooling water in the slow cooling zone, and the conveying speed of the steel plate so that a plate thickness cross-section average temperature of the steel plate at an end point of the slow cooling zone is a target temperature within a range of 550°C to 800°C.

7. The facility for producing a steel plate according to any one of Claims 1 to 6 comprising:
a rapid cooling control device configured to control a number of the rapid cooling nozzles ejecting the cooling water, a water amount density of the cooling water in the rapid cooling zone, and the conveying speed of the steel plate so that the cooling is stopped at a target temperature of the steel plate in which the plate thickness cross-section average temperature at an end point of the rapid cooling zone is within a range of room temperature to 550°C.

8. The facility for producing a steel plate according to any one of Claims 1 to 7, wherein
the steel plate of 100°C or less is a steel plate from which scale is removed with a surface scale removal device before heated in the heating furnace.

9. The facility for producing a steel plate according to any one of Claims 1 to 8, wherein
the draining device is disposed on an inlet side of the upper slow cooling nozzle closest to the inlet side in the slow cooling zone and on an outlet side of the upper rapid cooling nozzle closest to the outlet side in the rapid cooling zone.

10. A method for producing a steel plate comprising:
heating a steel plate of 100°C or less to an austenite temperature range in a heating furnace; and quenching the steel plate heated in the heating with a quenching device,
wherein, the quenching includes
slowly cooling the steel plate extracted from the heating furnace by a slow cooling zone of the quenching device disposed within 4 m from the heating furnace and
rapidly cooling the steel plate having passed through the slow cooling zone by a rapid cooling zone of the quenching device,
wherein, in the slow cooling, the slow cooling is performed by ejecting cooling water to the steel plate from at least a pair of upper and lower slow cooling nozzles in the slow cooling zone in which the slow cooling nozzles are disposed along a conveying direction of the steel plate and, in the rapid cooling, the rapid cooling is performed by ejecting cooling water to the steel plate from at least a pair of upper and lower rapid cooling nozzles in the rapid cooling zone in which the rapid cooling nozzles are disposed along the conveying direction of the steel plate, and
wherein, a draining device is disposed between the upper slow cooling nozzle in the slow cooling zone and the upper rapid cooling nozzle in the rapid cooling zone, and the draining device restrains the cooling water from the upper slow cooling nozzle and the cooling water from the upper rapid cooling nozzle to avoid mixture of the cooling water from the upper slow cooling nozzle and the cooling water from the upper rapid cooling nozzle.

11. The method for producing a steel plate according to Claim 10, wherein
in the slow cooling, the slow cooling is performed by ejecting the cooling water to the steel plate from the slow cooling nozzle while setting a water amount density of the cooling water in the slow cooling zone to 30 to 200 L/(min·m²), and
in the rapid cooling, the rapid cooling is performed by ejecting the cooling water to the steel plate from the rapid cooling nozzle while setting a water amount density of the cooling water in the rapid cooling zone 1000 to 4000 L/(min·m²).

12. The method for producing a steel plate according to Claim 10 or 11, wherein
a conveying speed control device controls a conveying speed of the steel plate so that time until each of a leading end and a trailing end of the steel plate enters the slow cooling zone after extracted from the heating furnace is less than 120 sec.

13. The method for producing a steel plate according to any one of Claims 10 to 12 comprising:
performing descaling to the steel plate heated in the heating with a descaling device between the heating and the quenching, wherein
the descaling is performed by ejecting ejection water to the steel plate from the descaling device while setting an energy density of the ejection water ejected from the descaling device set to 0.005 J/mm² or more.

14. The method for producing a steel plate according to Claim 13, wherein
in the descaling, the descaling is performed by ejecting the ejection water to the steel plate from the descaling device while setting an ejection pressure of the ejection water ejected from the descaling device to 0.5 MPa or more.

15. The method for producing a steel plate according to any one of Claims 10 to 14 comprising:
controlling a number of the slow cooling nozzles ejecting the cooling water, a water amount density of the cooling water in the slow cooling zone, and the conveying speed of the steel plate with a slow cooling control device so that a plate thickness cross-section average temperature of the steel plate at an end point of the slow cooling zone is a target temperature within a range of 550°C to 800°C.

16. The method for producing a steel plate according to any one of Claims 10 to 15 comprising:
controlling a number of the rapid cooling nozzles ejecting the cooling water, a water amount density of the cooling water in the rapid cooling zone, and the conveying speed of the steel plate with a rapid cooling control device so that cooling is stopped at a target temperature of the steel plate in which a plate thickness cross-section average temperature at an end point of the rapid cooling zone is within a range of room temperature to 550°C.

17. The method for producing a steel plate according to any one of Claims 10 to 16, wherein
the steel plate of 100°C or less is a steel plate from which scale is removed with a surface scale removal device before heated in the heating furnace.

18. The method for producing a steel plate according to any one of Claims 10 to 17, wherein
a draining device is disposed on an inlet side of the upper slow cooling nozzle closest to the inlet side in the slow cooling zone and on an outlet side of the upper rapid cooling nozzle closest to the outlet side in the rapid cooling zone, and the draining device restrains staying water staying on the steel plate to prevent the staying water from flowing out to an outside of the quenching device.
